# EUROPEAN PATENT APPLICATION

(11) **EP 3 832 625 A1**
(43) Date of publication of application: **09.06.2021**
(21) Application number: 19850028.2
(22) Date of filing: 19.06.2019
(51) Int. Cl.: G08G 5/00

(54) **MOBILE NETWORK-BASED UNMANNED AERIAL VEHICLE MONITORING METHOD AND APPARATUS**

(30) Priority: 16.08.2018 CN 201810934556
(71) Applicant: HUAWEI TECHNOLOGIES CO., LTD., Shenzhen, Guangdong 518129 (CN)
(72) Inventor: ZHU, Haoren, Shenzhen, Guangdong 518129 (CN); JIN, Weisheng, Shenzhen, Guangdong 518129 (CN)
(74) Representative: Gill Jennings & Every LLP
(86) International application number: PCT/CN2019/091848
(87) International publication number: WO 2020/034748

(57) **Abstract**

A mobile network-based drone supervision method and an apparatus are disclosed, to resolve a problem in the existing technology that extensive supervision cannot be performed on a drone. The method includes: A core network element receives a request message from an application server (201). The request message includes a target event executed on a target drone. The core network element executes the target event on the target drone based on the request message (202). The core network element returns a response message to the application server (203). The response message includes an execution result of the target event.

## Description

This application claims priority to Chinese Patent Application No. 201810934556.6, filed with the Chinese Patent Office on August 16, 2018 and entitled "MOBILE NETWORK-BASED DRONE SUPERVISION METHOD AND APPARATUS", which is incorporated herein by reference in its entirety.

### TECHNICAL FIELD

This application relates to the field of communications technologies, and in particular, to a mobile network-based drone supervision method and an apparatus.

### BACKGROUND

An unmanned aerial vehicle (unmanned aerial vehicle, UAV) is an unmanned flight vehicle operated by using a radio remote control device and a program control apparatus of the unmanned aerial vehicle, and is briefly referred to as a drone. Drones are widely used in a plurality of fields such as emergency rescue, environment detection, power line inspection, aerial photography and mapping, agricultural plant protection, and military because they have advantages such as informatization, automation, and no personal injury or loss of life when the drones are run in the air.

If the drones are widely used without corresponding supervision means, the drones may easily enter a restricted zone, affecting national security and normal flight of civil airplanes, and causing personal injuries and property losses.

In existing drone supervision means, a dedicated drone detection device, such as a radar device or an electronic fence, is deployed, but it is difficult to widely deploy drone detection devices in a region due to costs; or a dedicated supervision assistance device is disposed on a drone, to supervise the drone. However, an increasing quantity of manufacturers manufacture more types of drones, it is difficult to implement unified supervision on the drones. With the increase of drone types and expansion of drone flight zones, a method that can be used to provide extensive and unified supervision on more types of drones in a larger space range is urgently required.

### SUMMARY

Embodiments of this application provide a mobile network-based drone supervision method and an apparatus, to resolve a problem in the existing technology that extensive supervision cannot be performed on a drone.

A first aspect of this application provides a mobile network-based drone supervision method. The method includes:
A core network element may receive a request message from an application server. The request message includes a target event executed on a target drone. Then, the core network element may execute the target event on the target drone based on the request message, and then return a response message including an execution result of the target event to the application server. The response message is used to assist the application server in supervising the target drone. Mobile networks can serve drones manufactured by different vendors, and the mobile networks are widely deployed in a region. Therefore, in this method embodiment of this application, the response message provided by the core network element to the application server helps the application server perform unified and extensive supervision on the drones.

In a possible implementation, with reference to the first aspect, in a first possible implementation of the first aspect, the target event may include a verification event.

In a possible implementation, with reference to the first possible implementation of the first aspect, in a second possible implementation of the first aspect, the verification event may include at least one of drone control range verification, drone location verification, and controlled zone verification.

In a possible implementation, with reference to the second possible implementation of the first aspect, in a third possible implementation of the first aspect, if the target event includes the drone control range verification, that the core network element executes the target event on the target drone based on the request message includes: The core network element may determine, based on obtained location information of the target drone, whether the target drone is within a control range of a controller of the target drone.

The drone control range verification is performed on the target drone, and whether the target drone is in the control range of the controller of the target drone is determined based on the obtained location information of the target drone. In this way, a case in which the target drone is out of the control range of the controller of the target drone can be found in time.

In a possible implementation, with reference to the third possible implementation of the first aspect, in a fourth possible implementation of the first aspect, the request message further includes identity information of the target drone, and the method further includes: The core network element obtains the location information of the target drone based on the identity information of the target drone.

Compared with location information reported by the drone, the location information of the device that is actively obtained by the core network element based on the identity information of the device is more reliable. This helps improve reliability of an execution result of the drone control range verification performed on the target drone based on the location information of the drone.

In a possible implementation, with reference to the second possible implementation of the first aspect, in a fifth possible implementation of the first aspect, if the target event includes the drone location verification, that the core network element executes the target event on the target drone based on the request message includes: The core network element determines, based on location information reported by the target drone and obtained location information of the target drone, whether a location of the target drone is accurate.

The location information reported by the drone may be usually used as an important reference for supervising the drone. Accuracy of the location information reported by the drone affects supervision on the drone. The drone location verification helps ensure accuracy of the location information reported by the target drone.

In a possible implementation, with reference to the fifth possible implementation of the first aspect, in a sixth possible implementation of the first aspect, the request message further includes identity information of the target drone. The method further includes: The core network element obtains the location information of the target drone based on the identity information of the target drone.

Compared with location information reported by the drone, the location information of the device that is actively obtained by the core network element based on the identity information of the device is more reliable. This helps improve reliability of an execution result of the drone control range verification performed on the target drone based on the location information of the drone.

In a possible implementation, with reference to the second possible implementation of the first aspect, in a seventh possible implementation of the first aspect, if the target event includes the controlled zone verification, that the core network element executes the target event on the target drone based on the request message includes: The core network element determines, based on obtained location information of the target drone and the controlled zone information, whether a location of the target drone is in a controlled zone.

In a possible implementation, with reference to the seventh possible implementation of the first aspect, in an eighth possible implementation of the first aspect, the request message further includes the controlled zone information. The method further includes: The core network element obtains location information of the target drone based on identity information of the target drone.

Compared with location information reported by the drone, the location information of the device that is actively obtained by the core network element based on the identity information of the device is more reliable. This helps improve reliability of an execution result of the drone control range verification performed on the target drone based on the location information of the drone.

In a possible implementation, with reference to the eighth possible implementation of the first aspect, in a ninth possible implementation of the first aspect, that the core network element executes the target event on the target drone based on the request message further includes: If the core network element determines that the location of the target drone is not in the controlled zone, the core network element determines, based on the location information of the target drone and the controlled zone information, risk information that the target drone enters the controlled zone.

In a possible implementation, with reference to the eighth possible implementation of the first aspect, in a tenth possible implementation of the first aspect, if the controlled zone information is no-fly zone information, that the core network element executes the target event on the target drone based on the request message further includes: if the core network element determines that the location of the target drone is in a no-fly zone, the core network element determines a flight path along which the target drone flies out of the no-fly zone.

In a possible implementation, with reference to any one of the first possible implementation of the first aspect to the tenth possible implementation of the first aspect, in an eleventh possible implementation of the first aspect, the target event further includes authorization decision, and that the core network element executes the target event on the target drone based on the request message includes: The core network element determines, based on whether the target drone passes the verification event, whether the target drone violates a rule.

In a possible implementation, with reference to the eleventh possible implementation of the first aspect, in a twelfth possible implementation of the first aspect, the method further includes: The core network element sends a flight control command to the target drone based on whether the target drone violates the rule.

In a possible implementation, with reference to the twelfth possible implementation of the first aspect, in a thirteenth possible implementation of the first aspect, the core network element sends the flight control command to the target drone via control plane signaling.

In a possible implementation, with reference to the thirteenth possible implementation of the first aspect, in a fourteenth possible implementation of the first aspect, the flight control command includes a command indicating whether take-off is allowed or a flight management command for the target drone.

In a possible implementation, with reference to the fourteenth possible implementation of the first aspect, in a fifteenth possible implementation of the first aspect, the flight management command includes a command for instructing the target drone to hover, a command for instructing the target drone to land, or a command for instructing the target drone to return.

In a possible implementation, with reference to the fifteenth possible implementation of the first aspect, in a sixteenth possible implementation of the first aspect, that the core network element receives the request message from the application server includes: The core network element receives, via a service capability exposure network element, the request message from the application server. If the request message includes the identity information of the target drone, the identity information of the target drone in the request message forwarded by the service capability exposure network element is converted from an external identifier of a core network into an internal identifier of the core network.

In a possible implementation, with reference to any one of the first aspect to the sixteenth possible implementation of the first aspect, in a seventeenth possible implementation of the first aspect, the target event includes a statistical event, and that the core network element executes the target event on the target drone based on the request message includes: The core network element generates statistical information of the drone based on the obtained location information of the drone.

In a possible implementation, with reference to the seventeenth possible implementation of the first aspect, in an eighteenth possible implementation of the first aspect, the request message further includes information about a zone in which statistics are to be collected, and that the core network element generates statistical information of the drone based on the obtained location information of the drone includes: The core network element generates, based on the obtained location information of the drone, the statistical information of the drone in the zone in which statistics are to be collected.

A second aspect of this application provides a mobile network-based drone supervision method. The method may include: An application server sends a request message to a core network element. The request message includes a target event executed on a target drone. Then, the application server may receive a response message returned by the core network element. The response message includes an execution result of executing the target event by the core network element on the target drone. The application server sends a flight control command to the target drone based on target information, to supervise the target drone. The target information includes the execution result. Mobile networks can serve drones manufactured by different vendors, and the mobile networks are widely deployed in a region. Therefore, in this method embodiment of this application, the application server obtains the response message from the core network element. This facilitates implementation of unified and extensive supervision on the drones.

In a possible implementation, with reference to the second aspect, in a first possible implementation of the second aspect, before the application server sends the request message to the core network element, the method further includes: The application server receives a report message of the target drone. The report message is a take-off authorization request of the target drone or flight data that is periodically reported by the target drone in a flight process.

In a possible implementation, with reference to the first possible implementation of the second aspect, in a second possible implementation of the second aspect, the report message includes identity information of the target drone, and the method further includes: The application server performs identity verification on the target drone based on the identity information of the target drone and obtained pre-registration information of the drone. The target information may further include a result of the identity verification performed on the target drone.

In a possible implementation, with reference to the second possible implementation of the second aspect, in a third possible implementation of the second aspect, the flight data includes location information of the target drone, and the method further includes: The application server determines a flight path of the target drone based on the location information of the target drone. The target information may further include the flight path of the target drone.

In a possible implementation, with reference to the second aspect to the third possible implementation of the second aspect, in a fourth possible implementation of the second aspect, that the application server sends a flight control command to the target drone based on target information includes: The application server determines, based on the target information, whether the target drone violates a rule, and then sends the flight control command to the target drone based on whether the target drone violates the rule.

In a possible implementation, with reference to the fourth possible implementation of the second aspect, in a fifth possible implementation of the second aspect, the flight control command includes a command indicating whether take-off is allowed or a flight management command for the target drone.

In a possible implementation, with reference to the fifth possible implementation of the second aspect, in a sixth possible implementation of the second aspect, the flight management command includes a command for instructing the target drone to hover, a command for instructing the target drone to land, or a command for instructing the target drone to return

A third aspect of this application provides a mobile network-based drone supervision method. The method includes: A drone receives a first flight control command delivered by an application server and a second flight control command delivered by a controller of the target drone. Then, the drone may determine the first flight control command in the first flight control command and the second flight control command based on priority information, and execute the first flight control command. In this case, even if the flight control command delivered by the application server to the drone conflicts with the flight control command delivered by the controller to the drone, the drone may subject to the flight control command from the application server. This helps enhance an effect of managing the drone by the application server, and reduce a threat brought by the drone to public security.

A fourth aspect of this application provides a mobile network-based drone supervision method. The method includes: A core network element executes a target event on a target drone, and then sends a flight control command to the target drone based on target information, to supervise the target drone. The target information includes an execution result of the target event. Mobile networks can serve drones manufactured by different vendors, and the mobile networks are widely deployed in a region. Therefore, according to the mobile network-based drone supervision method in this application, unified and extensive supervision can be implemented on the drones.

In a possible implementation, with reference to the fourth aspect, in a first possible implementation of the fourth aspect, the target event includes a verification event.

In a possible implementation, with reference to the first possible implementation of the fourth aspect, in a second possible implementation of the fourth aspect, the verification event includes at least one of drone control range verification, drone location verification, and controlled zone verification.

In a possible implementation, with reference to the second possible implementation of the fourth aspect, in a third possible implementation of the fourth aspect, if the target event includes the drone control range verification, that a core network element executes a target event on a target drone includes: The core network element determines, based on obtained location information of the target drone, whether the target drone is within a control range of a controller of the target drone. The drone control range verification is performed on the target drone, and whether the target drone is in the control range of the controller of the target drone is determined based on the obtained location information of the target drone. In this way, a case in which the target drone is out of the control range of the controller of the target drone can be found in time.

In a possible implementation, with reference to the third possible implementation of the fourth aspect, in a fourth possible implementation of the fourth aspect, the method further includes: The core network element obtains the location information of the target drone based on identity information of the target drone.

In a possible implementation, with reference to the second possible implementation of the fourth aspect, in a fifth possible implementation of the fourth aspect, if the target event includes the drone location verification, that a core network element executes a target event on a target drone includes: The core network element determines, based on location information reported by the target drone and obtained location information of the target drone, whether a location of the target drone is accurate.

In a possible implementation, with reference to the fifth possible implementation of the fourth aspect, in a sixth possible implementation of the fourth aspect, the method further includes: The core network element obtains the location information of the target drone based on identity information of the target drone.

In a possible implementation, with reference to the second possible implementation of the fourth aspect, in a seventh possible implementation of the fourth aspect, if the target event includes the controlled zone verification, that a core network element executes a target event on a target drone includes: The core network element determines, based on obtained location information of the target drone and the controlled zone information, whether a location of the target drone is in a controlled zone.

In a possible implementation, with reference to the seventh possible implementation of the fourth aspect, in an eighth possible implementation of the fourth aspect, the method further includes: The core network element obtains the location information of the target drone based on identity information of the target drone.

In a possible implementation, with reference to the eighth possible implementation of the fourth aspect, in a ninth possible implementation of the fourth aspect, that a core network element executes a target event on a target drone further includes: If the core network element determines that the location of the target drone is not in the controlled zone, the core network element determines, based on the location information of the target drone and the controlled zone information, risk information that the target drone enters the controlled zone.

In a possible implementation, with reference to the eighth possible implementation of the fourth aspect, in a tenth possible implementation of the fourth aspect, if the controlled zone information is no-fly zone information, that a core network element executes a target event on a target drone further includes: If the core network element determines that the location of the target drone is in a no-fly zone, the core network element determines a flight path along which the target drone flies out of the no-fly zone.

In a possible implementation, with reference to any one of the fourth aspect to the tenth possible implementation of the fourth aspect, in an eleventh possible implementation of the fourth aspect, the target event includes a statistical event, and that a core network element executes a target event on a target drone includes: generating statistical information of the drone based on the obtained trusted location information of the drone.

In a possible implementation, with reference to the eleventh possible implementation of the fourth aspect, in a twelfth possible implementation of the fourth aspect, the generating statistical information of the drone based on the obtained trusted location information of the drone includes: generating, based on the obtained trusted location information of the drone, the statistical information of the drone in a zone in which statistics are to be collected.

In a possible implementation, with reference to any one of the fourth aspect to the twelfth possible implementation of the fourth aspect, in a thirteenth possible implementation of the fourth aspect, before the core network element sends the flight control command to the target drone based on the target information, the method further includes: The core network element receives a report message of the target drone. The report message may be a take-off authorization request of the target drone or flight data that is periodically reported by the target drone in a flight process.

In a possible implementation, with reference to the thirteenth possible implementation of the fourth aspect, in a fourteenth possible implementation of the fourth aspect, the report message includes the identity information of the target drone, and the method further includes: The core network element performs identity verification on the target drone based on the identity information of the target drone and obtained pre-registration information of the drone. The target information furthers include a result of the identity verification performed on the target drone.

In a possible implementation, with reference to the fourteenth possible implementation of the fourth aspect, in a fifteenth possible implementation of the fourth aspect, the flight data includes the location information of the target drone, and the method further includes: The core network element determines a flight path of the target drone based on the location information of the target drone. The target information further includes the flight path of the target drone.

In a possible implementation, with reference to any one of the fourth aspect to the fifteenth possible implementation of the fourth aspect, in a sixteenth possible implementation of the fourth aspect, that the core network element sends the flight control command to the target drone based on the target information includes: The core network element determines, based on the target information, whether the target drone violates a rule, and then sends the flight control command to the target drone based on whether the target drone violates the rule.

In a possible implementation, with reference to the sixteenth possible implementation of the fourth aspect, in a seventeenth possible implementation of the fourth aspect, the flight control command includes a command indicating whether take-off is allowed or a flight management command for the target drone.

In a possible implementation, with reference to the seventeenth possible implementation of the fourth aspect, in an eighteenth possible implementation of the fourth aspect, the flight management command includes a command for instructing the target drone to hover, a command for instructing the target drone to land, or a command for instructing the target drone to return.

A fifth aspect of this application provides a mobile network-based drone supervision method. The method includes: A drone receives a first flight control command delivered by a core network element and a second flight control command delivered by a controller of a target drone. Then, the drone may determine the first flight control command in the first flight control command and the second flight control command based on priority information, and execute the first flight control command. In this case, even if the flight control command delivered by the core network element to the drone conflicts with the flight control command delivered by the controller to the drone, the drone may subject to the flight control command from the core network element. This helps enhance an effect of managing the drone by the core network element, and reduce a threat brought by the drone to public security.

A sixth aspect of this application provides a mobile network-based drone supervision method. The method includes: An application server executes a target event on a target drone, and then sends a flight control command to the target drone based on target information via a mobile network, to supervise the target drone. The target information includes an execution result of the target event. Mobile networks can serve drones manufactured by different vendors, and the mobile networks are widely deployed in a region. Therefore, according to the mobile network-based drone supervision method in this application, unified and extensive supervision can be implemented on the drones.

In a possible implementation, with reference to the sixth aspect, in a first possible implementation of the sixth aspect, the target event includes a verification event.

In a possible implementation, with reference to the first possible implementation of the sixth aspect, in a second possible implementation of the sixth aspect, the verification event includes at least one of drone control range verification, drone location verification, and controlled zone verification.

In a possible implementation, with reference to the second possible implementation of the sixth aspect, in a third possible implementation of the sixth aspect, if the target event includes the drone control range verification, that an application server executes a target event on a target drone includes: The application server determines, based on obtained location information of the target drone, whether the target drone is within a control range of a controller of the target drone. The drone control range verification is performed on the target drone, and whether the target drone is in the control range of the controller of the target drone is determined based on the obtained location information of the target drone. In this way, a case in which the target drone is out of the control range of the controller of the target drone can be found in time.

In a possible implementation, with reference to the third possible implementation of the sixth aspect, in a fourth possible implementation of the sixth aspect, the method further includes: The application server obtains the location information of the target drone based on identity information of the target drone.

In a possible implementation, with reference to the second possible implementation of the sixth aspect, in a fifth possible implementation of the sixth aspect, if the target event includes the drone location verification, that an application server executes a target event on a target drone includes: The application server determines, based on location information reported by the target drone and obtained location information of the target drone, whether a location of the target drone is accurate.

In a possible implementation, with reference to the fifth possible implementation of the sixth aspect, in a sixth possible implementation of the sixth aspect, the method further includes: The application server obtains the location information of the target drone based on identity information of the target drone.

In a possible implementation, with reference to the second possible implementation of the sixth aspect, in a seventh possible implementation of the sixth aspect, if the target event includes the controlled zone verification, that an application server executes a target event on a target drone includes: The application server determines, based on obtained location information of the target drone and the controlled zone information, whether a location of the target drone is in a controlled zone.

In a possible implementation, with reference to the seventh possible implementation of the sixth aspect, in an eighth possible implementation of the sixth aspect, the method further includes: The application server obtains the location information of the target drone based on identity information of the target drone.

In a possible implementation, with reference to the eighth possible implementation of the sixth aspect, in a ninth possible implementation of the sixth aspect, that an application server executes a target event on a target drone further includes: If the application server determines that the location of the target drone is not in the controlled zone, the application server determines, based on the location information of the target drone and the controlled zone information, risk information that the target drone enters the controlled zone.

In a possible implementation, with reference to the eighth possible implementation of the sixth aspect, in a tenth possible implementation of the sixth aspect, if the controlled zone information is no-fly zone information, that an application server executes a target event on a target drone further includes: If the application server determines that the location of the target drone is in a no-fly zone, the application server determines a flight path along which the target drone flies out of the no-fly zone.

In a possible implementation, with reference to any one of the sixth aspect to the tenth possible implementation of the sixth aspect, in an eleventh possible implementation of the sixth aspect, the target event includes a statistical event, and that an application server executes a target event on a target drone includes: generating statistical information of the drone based on the obtained trusted location information of the drone.

In a possible implementation, with reference to the eleventh possible implementation of the sixth aspect, in a twelfth possible implementation of the sixth aspect, the generating statistical information of the drone based on the obtained trusted location information of the drone includes: generating, based on the obtained trusted location information of the drone, the statistical information of the drone in a zone in which statistics are to be collected.

In a possible implementation, with reference to any one of the sixth aspect to the twelfth possible implementation of the sixth aspect, in a thirteenth possible implementation of the sixth aspect, before the application server sends the flight control command to the target drone based on the target information, the method further includes: The application server receives a report message of the target drone. The report message may be a take-off authorization request of the target drone or flight data that is periodically reported by the target drone in a flight process.

In a possible implementation, with reference to the thirteenth possible implementation of the sixth aspect, in a fourteenth possible implementation of the sixth aspect, the report message includes identity information of the target drone, and the method further includes: The application server performs identity verification on the target drone based on the identity information of the target drone and obtained pre-registration information of the drone. The target information further includes a result of the identity verification performed on the target drone.

In a possible implementation, with reference to the fourteenth possible implementation of the sixth aspect, in a fifteenth possible implementation of the sixth aspect, the flight data includes location information of the target drone, and the method further includes: The application server determines a flight path of the target drone based on the location information of the target drone. The target information further includes the flight path of the target drone.

In a possible implementation, with reference to any one of the sixth aspect to the fifteenth possible implementation of the sixth aspect, in a sixteenth possible implementation of the sixth aspect, that the application server sends the flight control command to the target drone based on the target information includes: The application server determines, based on the target information, whether the target drone violates a rule, and sends the flight control command to the target drone based on whether the target drone violates the rule.

In a possible implementation, with reference to the sixteenth possible implementation of the sixth aspect, in a seventeenth possible implementation of the sixth aspect, the flight control command includes a command indicating whether take-off is allowed or a flight management command for the target drone.

In a possible implementation, with reference to the seventeenth possible implementation of the sixth aspect, in an eighteenth possible implementation of the sixth aspect, the flight management command includes a command for instructing the target drone to hover, a command for instructing the target drone to land, or a command for instructing the target drone to return.

A seventh aspect of this application provides a core network element, including: a receiving unit, configured to receive a request message from an application server, where the request message includes a target event executed on a target drone; an event execution unit, configured to execute the target event on the target drone based on the request message; and a sending unit, configured to return a response message to the application server, where the response message includes an execution result of the target event. After the receiving unit in the core network element receives the request information from the application server, the event execution unit may execute the target event on the target drone based on the request information, to obtain the execution result of the target event. The execution result of the target event is used to supervise the target drone. Then, the sending unit may return the response message including the execution result of the target event to the application server. The response message is used to assist the application server in supervising the target drone. Mobile networks can serve drones manufactured by different vendors, and the mobile networks are widely deployed in a region. Therefore, in this apparatus embodiment of this application, the response message provided by the core network element to the application server helps the application server perform unified and extensive supervision on the drones.

In a possible implementation, with reference to the seventh aspect, in a first possible implementation of the seventh aspect, the target event includes a verification event.

In a possible implementation, with reference to the first possible implementation of the seventh aspect, in a second possible implementation of the seventh aspect, the verification event includes at least one of drone control range verification, drone location verification, and controlled zone verification.

In a possible implementation, with reference to the second possible implementation of the seventh aspect, in a third possible implementation of the seventh aspect, if the target event includes the drone control range verification, the event executionunit is configured to determine, based on obtained location information of the target drone, whether the target drone is within a control range of a controller of the target drone. The drone control range verification is performed on the target drone, and whether the target drone is in the control range of the controller of the target drone is determined based on the obtained location information of the target drone. In this way, a case in which the target drone is out of the control range of the controller of the target drone can be found in time.

In a possible implementation, with reference to the third possible implementation of the seventh aspect, in a fourth possible implementation of the seventh aspect, the request message further includes identity information of the target drone, and the event execution unit is further configured to obtain the location information of the target drone based on the identity information of the target drone.

In a possible implementation, with reference to the second possible implementation of the seventh aspect, in a fifth possible implementation of the seventh aspect, if the target event includes the drone location verification, the event execution unit is configured to determine, based on location information reported by the target drone and obtained location information of the target drone, whether a location of the target drone is accurate.

In a possible implementation, with reference to the fifth possible implementation of the seventh aspect, in a sixth possible implementation of the seventh aspect, the request message further includes identity information of the target drone, and the event execution unit is further configured to obtain the location information of the target drone based on the identity information of the target drone.

In a possible implementation, with reference to the second possible implementation of the seventh aspect, in a seventh possible implementation of the seventh aspect, if the target event includes the controlled zone verification, the event execution unit is configured to determine, based on obtained location information of the target drone and the controlled zone information, whether a location of the target drone is in a controlled zone.

In a possible implementation, with reference to the seventh possible implementation of the seventh aspect, in an eighth possible implementation of the seventh aspect, the request message further includes the controlled zone information, and the event execution unit is further configured to obtain the location information of the target drone based on the identity information of the target drone.

In a possible implementation, with reference to the eighth possible implementation of the seventh aspect, in a ninth possible implementation of the seventh aspect, the event execution unit is further configured to: if determining that the location of the target drone is not in the controlled zone, determine, based on the location information of the target drone and the controlled zone information, risk information that the target drone enters the controlled zone.

In a possible implementation, with reference to the eighth possible implementation of the seventh aspect, in a tenth possible implementation of the seventh aspect, if the controlled zone information is no-fly zone information, the event execution unit is further configured to: if determining that the location of the target drone is in a no-fly zone, determine a flight path along which the target drone flies out of the no-fly zone.

In a possible implementation, with reference to any one of the first possible implementation of the seventh aspect to the tenth possible implementation of the seventh aspect, in an eleventh possible implementation of the seventh aspect, the target event further includes authorization decision, and the event execution unit is configured to determine, based on whether the target drone passes the verification event, whether the target drone violates a rule.

In a possible implementation, with reference to the eleventh possible implementation of the seventh aspect, in a twelfth possible implementation of the seventh aspect, the sending unit is further configured to send a flight control command to the target drone based on whether the target drone violates the rule.

In a possible implementation, with reference to the twelfth possible implementation of the seventh aspect, in a thirteenth possible implementation of the seventh aspect, the flight control command is sent to the target drone via control plane signaling.

In a possible implementation, with reference to the thirteenth possible implementation of the seventh aspect, in a fourteenth possible implementation of the seventh aspect, the flight control command includes a command indicating whether take-off is allowed or a flight management command for the target drone.

In a possible implementation, with reference to the fourteenth possible implementation of the seventh aspect, in a fifteenth possible implementation of the seventh aspect, the flight management command includes a command for instructing the target drone to hover, a command for instructing the target drone to land, or a command for instructing the target drone to return.

In a possible implementation, with reference to the fifteenth possible implementation of the seventh aspect, in a sixteenth possible implementation of the seventh aspect, the receiving unit is configured to receive, via a service capability exposure network element, the request message from the application server. If the request message includes the identity information of the target drone, the identity information of the target drone in the request message forwarded by the service capability exposure network element is converted from an external identifier of a core network into an internal identifier of the core network.

In a possible implementation, with reference to the seventh aspect to the sixteenth possible implementation of the seventh aspect, in a seventeenth possible implementation of the seventh aspect, the target event includes a statistical event, and the event execution unit is configured to:
generate statistical information of the drone based on the obtained location information of the drone.

In a possible implementation, with reference to the seventeenth possible implementation of the seventh aspect, in an eighteenth possible implementation of the seventh aspect, the request message further includes information about a zone in which statistics are to be collected, and the event execution unit is configured to generate, based on the obtained location information of the drone, the statistical information of the drone in the zone in which statistics are to be collected.

An eighth aspect of this application provides an application server, including: a message sending unit, configured to send a request message to a core network element, where the request message includes a target event executed on a target drone; a receiving unit, configured to receive a response message returned by the core network element, where the response message includes an execution result of executing the target event by the core network element on the target drone; and a command sending unit, configured to send a flight control command to the target drone based on target information, where the target information includes the execution result. The message sending unit in the application server may send the request message to the core network element. When receiving the corresponding response message, the receiving unit may obtain the execution result of executing the target event by the core network element on the target drone. Then, the command sending unit may send the flight control command to the target drone based on the target information including the execution result, to supervise the target drone. Mobile networks can serve drones manufactured by different vendors, and the mobile networks are widely deployed in a region. Therefore, in this method embodiment of this application, the application server obtains the response message from the core network element. This facilitates implementation of unified and extensive supervision on the drones.

In a possible implementation, with reference to the eighth aspect, in a first possible implementation of the eighth aspect, before the message sending unit sends the request message to the core network element, the receiving unit is further configured to receive a report message of the target drone. The report message is a take-off authorization request of the target drone or flight data that is periodically reported by the target drone in a flight process.

In a possible implementation, with reference to the first possible implementation of the eighth aspect, in a second possible implementation of the eighth aspect, the report message includes identity information of the target drone, and the command sending unit is configured to perform identity verification on the target drone based on the identity information of the target drone and obtained pre-registration information of the drone. The target information further includes a result of the identity verification performed on the target drone.

In a possible implementation, with reference to the second possible implementation of the eighth aspect, in a third possible implementation of the eighth aspect, the flight data includes location information of the target drone, and the command sending unit is configured to determine a flight path of the target drone based on the location information of the target drone. The target information further includes the flight path of the target drone.

In a possible implementation, with reference to any one of the eighth aspect to the third possible implementation of the eighth aspect, in a fourth possible implementation of the eighth aspect, the command sending unit is configured to: determine, based on the target information, whether the target drone violates a rule, and send the flight control command to the target drone based on whether the target drone violates the rule.

In a possible implementation, with reference to the fourth possible implementation of the eighth aspect, in a fifth possible implementation of the eighth aspect, the flight control command includes a command indicating whether take-off is allowed or a flight management command for the target drone.

In a possible implementation, with reference to the fifth possible implementation of the eighth aspect, in a sixth possible implementation of the eighth aspect, the flight management command includes a command for instructing the target drone to hover, a command for instructing the target drone to land, or a command for instructing the target drone to return

A ninth aspect of this application provides a drone, including: a receiving unit, configured to receive a first flight control command delivered by an application server and a second flight control command delivered by a controller of a target drone; a determining unit, configured to determine the first flight control command in the first flight control command and the second flight control command based on priority information; and a command execution unit, configured to execute the first flight control command. In this case, even if the flight control command delivered by the application server to the drone conflicts with the flight control command delivered by the controller to the drone, the drone determines a target flight control command by using the determining unit, and executes the target flight control command by using the command execution unit, so that the drone may subject to the flight control command from the application server. This helps enhance an effect of managing the drone by the application server, and reduce a threat brought by the drone to public security.

A tenth aspect of this application provides a core network element, including: an event execution unit, configured to execute a target event on a target drone; and a sending unit, configured to send a flight control command to the target drone based on target information, where the target information includes an execution result of the target event. The event execution unit in the core network element may execute the target event on the target drone to obtain the execution result of the target event. Then, the sending unit may send the flight control command to the target drone based on the target information, to supervise the target drone. The target information includes the execution result of the target event. Mobile networks can serve drones manufactured by different vendors, and the mobile networks are widely deployed in a region. Therefore, according to the mobile network-based drone supervision method in this application, unified and extensive supervision can be implemented on the drones.

In a possible implementation, with reference to the tenth aspect, in a first possible implementation of the tenth aspect, the target event includes a verification event.

In a possible implementation, with reference to the first possible implementation of the tenth aspect, in a second possible implementation of the tenth aspect, the verification event includes at least one of drone control range verification, drone location verification, and controlled zone verification.

In a possible implementation, with reference to the second possible implementation of the tenth aspect, in a third possible implementation of the tenth aspect, if the target event includes the drone control range verification, the event execution unit is configured to determine, based on obtained location information of the target drone, whether the target drone is within a control range of a controller of the target drone. The drone control range verification is performed on the target drone, and whether the target drone is in the control range of the controller of the target drone is determined based on the obtained location information of the target drone. In this way, a case in which the target drone is out of the control range of the controller of the target drone can be found in time.

In a possible implementation, with reference to the third possible implementation of the tenth aspect, in a fourth possible implementation of the tenth aspect, the event execution unit is further configured to obtain the location information of the target drone based on identity information of the target drone.

In a possible implementation, with reference to the second possible implementation of the tenth aspect, in a fifth possible implementation of the tenth aspect, if the target event includes the drone location verification, the event execution unit is configured to determine, based on location information reported by the target drone and obtained location information of the target drone, whether a location of the target drone is accurate.

In a possible implementation, with reference to the fifth possible implementation of the tenth aspect, in a sixth possible implementation of the tenth aspect, the event execution unit is further configured to obtain the location information of the target drone based on identity information of the target drone.

In a possible implementation, with reference to the second possible implementation of the tenth aspect, in a seventh possible implementation of the tenth aspect, if the target event includes the controlled zone verification, the event execution unit is configured to determine, based on obtained location information of the target drone and the controlled zone information, whether a location of the target drone is in a controlled zone.

In a possible implementation, with reference to the seventh possible implementation of the tenth aspect, in an eighth possible implementation of the tenth aspect, the event execution unit is further configured to obtain the location information of the target drone based on identity information of the target drone.

In a possible implementation, with reference to the eighth possible implementation of the tenth aspect, in a ninth possible implementation of the tenth aspect, the event execution unit is further configured to: if determining that the location of the target drone is not in the controlled zone, determine, based on the location information of the target drone and the controlled zone information, risk information that the target drone enters the controlled zone.

In a possible implementation, with reference to the eighth possible implementation of the tenth aspect, in a tenth possible implementation of the tenth aspect, if the controlled zone information is no-fly zone information, the event execution unit is further configured to: if determining that the location of the target drone is in a no-fly zone, determine a flight path along which the target drone flies out of the no-fly zone.

In a possible implementation, with reference to the tenth aspect to the tenth possible implementation of the tenth aspect, in an eleventh possible implementation of the tenth aspect, the target event includes a statistical event, and the event execution unit is configured to generate statistical information of the drone based on the obtained trusted location information of the drone.

In a possible implementation, with reference to the eleventh possible implementation of the tenth aspect, in a twelfth possible implementation of the tenth aspect, the event execution unit is configured to:
generate, based on the obtained trusted location information of the drone, statistical information of the drone in a zone in which statistics are to be collected.

In a possible implementation, with reference to any one of the tenth aspect to the twelfth possible implementation of the tenth aspect, in a thirteenth possible implementation of the tenth aspect, before the flight control command is sent to the target drone based on the target information, the core network element further includes a receiving unit, configured to receive a report message of the target drone. The report message is a take-off authorization request of the target drone or flight data that is periodically reported by the target drone in a flight process.

In a possible implementation, with reference to the thirteenth possible implementation of the tenth aspect, in a fourteenth possible implementation of the tenth aspect, the report message includes identity information of the target drone, and the event execution unit is further configured to perform identity verification on the target drone based on the identity information of the target drone and obtained pre-registration information of the drone. The target information further includes a result of the identity verification performed on the target drone.

In a possible implementation, with reference to the fourteenth possible implementation of the tenth aspect, in a fifteenth possible implementation of the tenth aspect, the flight data includes the location information of the target drone, and the event execution unit is further configured to determine a flight path of the target drone based on the location information of the target drone. The target information further includes the flight path of the target drone.

In a possible implementation, with reference to any one of the tenth aspect to the fifteenth possible implementation of the tenth aspect, in a sixteenth possible implementation of the tenth aspect, the sending unit is configured to: determine, based on the target information, whether the target drone violates a rule, and send the flight control command to the target drone based on whether the target drone violates the rule.

In a possible implementation, with reference to the sixteenth possible implementation of the tenth aspect, in a seventeenth possible implementation, the flight control command includes a command indicating whether take-off is allowed or a flight management command for the target drone.

In a possible implementation, with reference to the seventeenth possible implementation of the tenth aspect, in an eighteenth possible implementation of the tenth aspect, the flight management command includes a command for instructing the target drone to hover, a command for instructing the target drone to land, or a command for instructing the target drone to return.

An eleventh aspect of this application provides a drone, including: a receiving unit, configured to receive a first flight control command delivered by a core network element and a second flight control command delivered by a controller of a target drone; a determining unit, configured to determine the first flight control command in the first flight control command and the second flight control command based on priority information; and a command execution unit, configured to execute the first flight control command. In this case, even if the flight control command delivered by the core network element to the drone conflicts with the flight control command delivered by the controller to the drone, by using the determining unit and the command execution unit, the drone may subject to the flight control command from the core network element. This helps enhance an effect of managing the drone by the core network element, and reduce a threat brought by the drone to public security.

A twelfth aspect of this application provides an application server, including: an event execution unit, configured to execute a target event on a target drone; and a sending unit, configured to send a flight control command to the target drone based on target information via a mobile network, where the target information includes an execution result of the target event. The event execution unit in the application server may execute the target event on the target drone to obtain the execution result of the target event. Then, the sending unit may determine the flight control command for the target drone based on the target information, and send the flight control command to the target drone via the mobile network, to supervise the target drone. The target information includes the execution result of the target event. Mobile networks can serve drones manufactured by different vendors, and the mobile networks are widely deployed in a region. Therefore, according to the mobile network-based drone supervision method in this application, unified and extensive supervision can be implemented on the drones.

In a possible implementation, with reference to the twelfth aspect, in a first possible implementation of the twelfth aspect, the target event includes a verification event.

In a possible implementation, with reference to the first possible implementation of the twelfth aspect, in a second possible implementation of the twelfth aspect, the verification event includes at least one of drone control range verification, drone location verification, and controlled zone verification.

In a possible implementation, with reference to the second possible implementation of the twelfth aspect, in a third possible implementation of the twelfth aspect, if the target event includes the drone control range verification, the event execution unit is configured to determine, based on obtained location information of the target drone, whether the target drone is within a control range of a controller of the target drone. The drone control range verification is performed on the target drone, and whether the target drone is in the control range of the controller of the target drone is determined based on the obtained location information of the target drone. In this way, a case in which the target drone is out of the control range of the controller of the target drone can be found in time.

In a possible implementation, with reference to the third possible implementation of the twelfth aspect, in a fourth possible implementation of the twelfth aspect, the event execution unit is further configured to obtain the location information of the target drone based on identity information of the target drone.

In a possible implementation, with reference to the second possible implementation of the twelfth aspect, in a fifth possible implementation of the twelfth aspect, if the target event includes the drone location verification, the event execution unit is configured to determine, based on location information reported by the target drone and obtained location information of the target drone, whether a location of the target drone is accurate.

In a possible implementation, with reference to the fifth possible implementation of the twelfth aspect, in a sixth possible implementation of the twelfth aspect, the event execution unit is further configured to obtain the location information of the target drone based on identity information of the target drone.

In a possible implementation, with reference to the second possible implementation of the twelfth aspect, in a seventh possible implementation of the twelfth aspect, if the target event includes the controlled zone verification, the event execution unit is configured to determine, based on obtained location information of the target drone and the controlled zone information, whether a location of the target drone is in a controlled zone.

In a possible implementation, with reference to the seventh possible implementation of the twelfth aspect, in an eighth possible implementation of the twelfth aspect, the event execution unit is further configured to obtain the location information of the target drone based on identity information of the target drone.

In a possible implementation, with reference to the eighth possible implementation of the twelfth aspect, in a ninth possible implementation of the twelfth aspect, the event execution unit is further configured to: if determining that the location of the target drone is not in the controlled zone, determine, based on the location information of the target drone and the controlled zone information, risk information that the target drone enters the controlled zone.

In a possible implementation, with reference to the eighth possible implementation of the twelfth aspect, in an eleventh possible implementation of the twelfth aspect, if the controlled zone information is no-fly zone information, the event execution unit is further configured to: if determining that the location of the target drone is in a no-fly zone, determine a flight path along which the target drone flies out of the no-fly zone.

In a possible implementation, with reference to any one of the twelfth aspect to the tenth possible implementation of the twelfth aspect, in an eleventh possible implementation of the twelfth aspect, the target event includes a statistical event, and the event execution unit is configured to generate statistical information of the drone based on the obtained trusted location information of the drone.

In a possible implementation, with reference to the eleventh possible implementation of the twelfth aspect, in a twelfth possible implementation of the twelfth aspect, the event execution unit is further configured to generate, based on the obtained trusted location information of the drone, statistical information of the drone in a zone in which statistics are to be collected.

In a possible implementation, with reference to any one of the twelfth aspect to the twelfth possible implementation of the twelfth aspect, in a thirteenth possible implementation of the twelfth aspect, before the flight control command is sent to the target drone based on the target information, the application server further includes a receiving unit, configured to receive a report message of the target drone. The report message is a take-off authorization request of the target drone or flight data that is periodically reported by the target drone in a flight process.

In a possible implementation, with reference to the thirteenth possible implementation of the twelfth aspect, in a fourteenth possible implementation of the twelfth aspect, the report message includes the identity information of the target drone, and the event execution unit is further configured to perform identity verification on the target drone based on the identity information of the target drone and obtained pre-registration information of the drone. The target information further includes a result of the identity verification performed on the target drone.

In a possible implementation, with reference to the fourteenth possible implementation of the twelfth aspect, in a fifteenth possible implementation of the twelfth aspect, the flight data includes the location information of the target drone, and the event execution unit is further configured to determine a flight path of the target drone based on the location information of the target drone. The target information further includes the flight path of the target drone.

In a possible implementation, with reference to any one of the twelfth aspect to the fifteenth possible implementation of the twelfth aspect, in a sixteenth possible implementation of the twelfth aspect, the sending unit is configured to: determine, based on the target information, whether the target drone violates a rule, and send the flight control command to the target drone based on whether the target drone violates the rule.

In a possible implementation, with reference to the sixteenth possible implementation of the twelfth aspect, in a seventeenth possible implementation of the twelfth aspect, the flight control command includes a command indicating whether take-off is allowed or a flight management command for the target drone.

In a possible implementation, with reference to the seventeenth possible implementation of the twelfth aspect, in an eighteenth possible implementation of the twelfth aspect, the flight management command includes a command for instructing the target drone to hover, a command for instructing the target drone to land, or a command for instructing the target drone to return.

A thirteenth aspect of this application provides a communications device, including at least one processor, a memory, a communications line, at least one communications interface, and a computer execution instruction that is stored in the memory and that can be run on the processor. When the computer execution instruction is executed by the processor, the processor performs the method according to any one of the first aspect or the possible implementations of the first aspect, performs the method according to any one of the second aspect or the possible implementations of the second aspect, performs the method according to the third aspect, performs the method according to any one of the fourth aspect or the possible implementations of the fourth aspect, performs the method according to the fifth aspect, or performs the method according to any one of the sixth aspect or the possible implementations of the sixth aspect.

When the processor performs the method according to any one of the first aspect or the possible implementations of the first aspect, or performs the method according to any one of the fourth aspect or the possible implementations of the fourth aspect, the communications device may correspond to a core network element. When the processor performs the method according to any one of the second aspect or the possible implementations of the second aspect, or performs the method according to any one of the sixth aspect or the possible implementations of the sixth aspect, the communications device may correspond to an application server. When the processor performs the method according to the third aspect or the method according to the fifth aspect, the communications device may correspond to a drone.

A fourteenth aspect of this application provides a computer-readable storage medium storing one or more computer execution instructions. When the computer execution instructions are executed by the processor, the processor performs the method according to any one of the first aspect or the possible implementations of the first aspect, performs the method according to any one of the second aspect or the possible implementations of the second aspect, performs the method according to the third aspect, performs the method according to any one of the fourth aspect or the possible implementations of the fourth aspect, performs the method according to the fifth aspect, or performs the method according to any one of the sixth aspect or the possible implementations of the sixth aspect.

A fifteenth aspect of this application provides a computer program product storing one or more computer execution instructions. When the computer execution instructions are executed by the processor, the processor performs the method according to any one of the first aspect or the possible implementations of the first aspect, performs the method according to any one of the second aspect or the possible implementations of the second aspect, performs the method according to the third aspect, performs the method according to any one of the fourth aspect or the possible implementations of the fourth aspect, performs the method according to the fifth aspect, or performs the method according to any one of the sixth aspect or the possible implementations of the sixth aspect.

A sixteenth aspect of this application provides a mobile network-based drone supervision system. The system includes:
a core network element, configured to perform the method according to any one of the first aspect or the possible implementations of the first aspect;
an application server, configured to perform the method according to any one of the second aspect or the possible implementations of the second aspect; and
a drone, configured to perform the method according to the third aspect.

A seventeenth aspect of this application provides a mobile network-based drone supervision system. The system includes:
a core network element, configured to perform the method according to any one of the fourth aspect or the possible implementations of the fourth aspect; and
a drone, configured to perform the method according to the fifth aspect.

An eighteenth aspect of this application provides a mobile network-based drone supervision system. The system includes:
an application server, configured to perform the method according to any one of the sixth aspect or the possible implementations of the sixth aspect; and
a drone, configured to perform the method according to the third aspect.

### BRIEF DESCRIPTION OF DRAWINGS

FIG. 1 is a schematic diagram of an embodiment of a mobile network-based drone supervision system according to this application;
FIG. 2 is a schematic diagram of an embodiment of a mobile network-based drone supervision method according to this application;
FIG. 3 to FIG. 6 are schematic diagrams of four possible scenarios in which drone systems access mobile networks;
FIG. 7 is a schematic diagram of a possible embodiment of performing relative control range verification by a core network element according to this application;
FIG. 8 is a schematic diagram of a possible embodiment of performing absolute control range verification by a core network element according to this application;
FIG. 9 is a schematic diagram of a possible embodiment of performing drone location verification by a core network element according to this application;
FIG. 10 is a schematic diagram of a network architecture to which a drone supervision method in this application is applied;
FIG. 11 is a schematic diagram of another embodiment of a mobile network-based drone supervision method according to this application;
FIG. 12 is a schematic diagram of another network architecture to which a drone supervision method in this application is applied;
FIG. 13 is a schematic diagram of another embodiment of a mobile network-based drone supervision method according to this application;
FIG. 14 is a schematic diagram of another network architecture to which a drone supervision method in this application is applied;
FIG. 15 is a schematic diagram of another embodiment of a mobile network-based drone supervision method according to this application;
FIG. 16 is a schematic diagram of another embodiment of a mobile network-based drone supervision system according to this application;
FIG. 17 is a schematic diagram of another embodiment of a mobile network-based drone supervision method according to this application;
FIG. 18 is a schematic diagram of another network architecture to which a drone supervision method in this application is applied;
FIG. 19 is a schematic diagram of another embodiment of a mobile network-based drone supervision method according to this application;
FIG. 20 is a schematic diagram of another network architecture to which a drone supervision method in this application is applied;
FIG. 21 is a schematic diagram of an embodiment of a communications device according to this application;
FIG. 22 is a schematic diagram of an embodiment of a core network element according to this application;
FIG. 23 is a schematic diagram of an embodiment of an application server according to this application;
FIG. 24 is a schematic diagram of an embodiment of a drone according to this application;
FIG. 25 is a schematic diagram of another embodiment of an application server according to this application;
FIG. 26 is a schematic diagram of another embodiment of a core network element according to this application; and
FIG. 27 is a schematic diagram of another embodiment of a drone according to this application.

### DESCRIPTION OF EMBODIMENTS

In the specification, claims, and accompanying drawings of this application, the terms such as "first" and "second" are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

As drone technologies become mature, drones used in the military field are gradually used in the civil field. If there are no complete supervision measures and civil drones are allowed to fly in disorder, there will be a great threat to public safety. However, in existing drone supervision means, a dedicated supervision device is deployed, resulting in high costs and limited coverage area; or each manufacturer supervises drones manufactured by the manufacturer, but it is difficult to implement unified supervision on drones of different manufacturers.

A mobile network is a mobile communication hardware architecture. Considering that mobile networks are widely deployed and can be applied to drones of different vendors. This application provides a mobile network-based drone supervision method and an apparatus, to implement unified and extensive supervision on the drones.

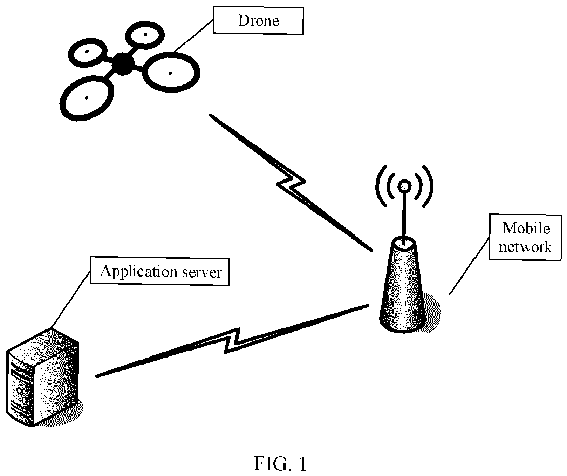

FIG. 1 is a schematic diagram of an embodiment of a mobile network-based drone supervision system according to this application. As shown in FIG. 1, the mobile network-based drone supervision system in this application may include a mobile network (where a base station represents the mobile network in FIG. 1), a drone, and an application server. A communication connection may be directly established between the drone and the mobile network by disposing a mobile subscriber identity card such as a subscriber identity module (subscriber identification module, SIM) or a user identity module (user identity module, UIM) in the drone. Alternatively, by disposing a mobile user identity card in a controller matching the drone, a communication connection may be indirectly established between the drone and the mobile network via the controller corresponding to the drone. In the following embodiments, data transmission between the drone and the mobile network may be data transmission implemented through the direct communication connection established between the drone and the mobile network, or may be data transmission implemented through the communication connection indirectly established between the drone and the mobile network via the controller corresponding to the drone.

From a service perspective, the mobile network may include a radio access network (radio access network, RAN) and a core network (core network, CN). The RAN may be connected to the CN, the RAN is responsible for user access, and the CN is responsible for service processing. The RAN includes but is not limited to the base station, and the CN includes but is not limited to a core network element.

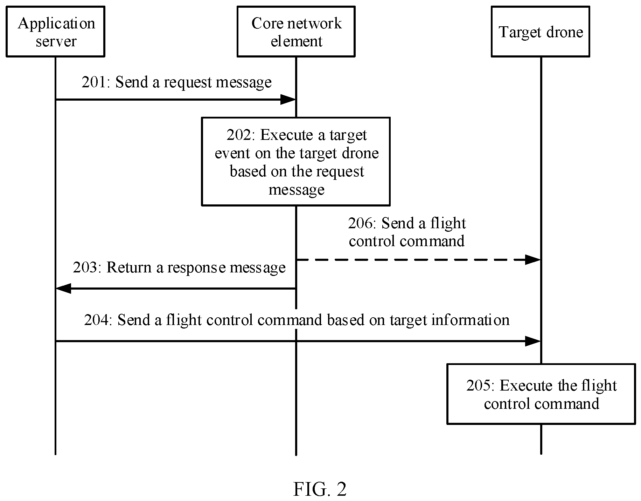

Based on the drone supervision system corresponding to FIG. 1, the following provides an embodiment of the drone supervision method of this application. Specifically, referring to FIG. 2, an embodiment of the mobile network-based drone supervision method of this application includes the following steps.

201: The application server sends a request message to the core network element.

The application server may send the request message to the core network element. For example, the request message may be a subscription request, and the request message includes a target event executed on a target drone, to request the core network element to execute the target event on the target drone. For example, an execution result of the target event may be used to supervise the target drone.

In a possible implementation, the application server may send the request message to the core network element via a service capability exposure network element, and the service capability exposure network element may perform corresponding conversion on the request message. For example, if the request message includes external identity information of the target drone, identity information of the target drone in the request message forwarded by the service capability exposure network element is converted from an external identifier of the core network into an internal identifier of the core network.

In a 5G network structure, a service capability exposure network element may be a network exposure function (network exposure function, NEF) network element. The network element mainly supports secure interaction between a mobile network and an application server, and can securely expose a network capability and an event to a third party, to enhance or improve quality of service of an application. The mobile network can also securely obtain related data from the third party, to enhance intelligent decision-making of the network. The network element supports restoring structured data from a unified database or storing structured data in a unified database. In a 4G network architecture, a service capability exposure network element may be a service capability exposure unit (service capability exposure function, SCEF) network element.

202: The core network element executes the target event on the target drone based on the request message.

After receiving the request message from the application server, the core network element may execute the target event on the target drone based on the request message, and obtain the execution result of the target event.

203: The core network element returns a response message to the application server.

After obtaining the execution result of the target event, the core network element may return the response message corresponding to the request message to the application server. The response message includes the execution result of executing the target event by the core network element on the target drone.

204: The application server sends a flight control command to the target drone based on target information.

After receiving the response message returned by the core network element, the application server may obtain the execution result of executing the target event by the core network element on the target drone. Then, the application server may send the flight control command to the target drone based on the target information. The target information may include the obtained execution result of executing the target event by the core network element on the target drone.

205: The target drone executes the flight control command.

Specifically, in step 202, the target event is usually an event related to location information of the target drone. Therefore, in a process of executing the target event on the target drone, the location information of the target drone usually needs to be obtained. The following provides several possible methods for obtaining the location information of the target drone.
(1) A positioning apparatus such as a GPS apparatus may be usually mounted on a drone, so that location information of the drone may be obtained. Therefore, in a first possible source, the target drone may report the location information. An execution body of the target event, where the embodiment corresponding to FIG. 2 is used as an example, namely, the core network element, may obtain the location information reported by the target drone, and then execute the target event based on the location information reported by the target drone. However, the location information reported by the drone is not supervised, and has relatively low reliability. Therefore, reliability of the execution result of the target event executed on the target drone based on the location information reported by the drone is also relatively low, and there are supervision loopholes.
(2) The location information of the target drone is actively obtained based on the identity information of the target drone. For example, a device accessing an internet may obtain location information of the device based on an internet protocol address (internet protocol address, IP address) of the device. Such a manner of obtaining the location information of the device may be referred to as an internet manner. Alternatively, when a device is connected to the mobile network, the core network may obtain location information of the device based on a mobile network identifier of the device. Such a manner of obtaining the location information of the device may be referred to as a cellular manner. For example, the mobile network identifier of the device may be an international mobile subscriber identity (international mobile subscriber identification number, IMSI), an international mobile equipment identity (international mobile equipment identity, IMEI), a mobile subscriber international ISDN/PSTN number (mobile subscriber international ISDN/PSTN number, MSISDN), or a generic public subscription identifier (generic public subscription identifier, GPSI).

Specifically, the target event may include at least one of a verification event and a statistical event.

### 1. The target event includes the verification event.

The verification event in the target event may be related to the location information of the drone. For example, the verification event in the target event may include at least one of drone control range verification, drone location verification, and controlled zone verification.

### (1) The target event includes the drone control range verification.

If a controller of the target drone can remotely control the target drone, there is a relatively high probability that the target drone performs a malicious attack. To ensure public safety, when the target drone performs a flight task under control of the controller matching the target drone, drone control range verification is performed on the target drone, and whether the target drone is within a control range of the controller of the target drone is determined based on the obtained location information of the target drone, so that a case in which the target drone is out of the control range of the controller of the target drone can be found in time.

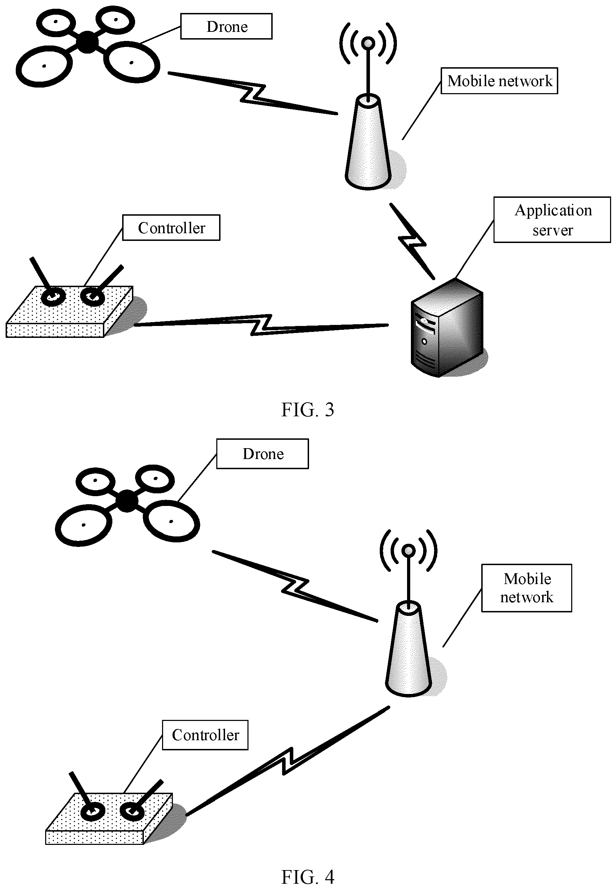

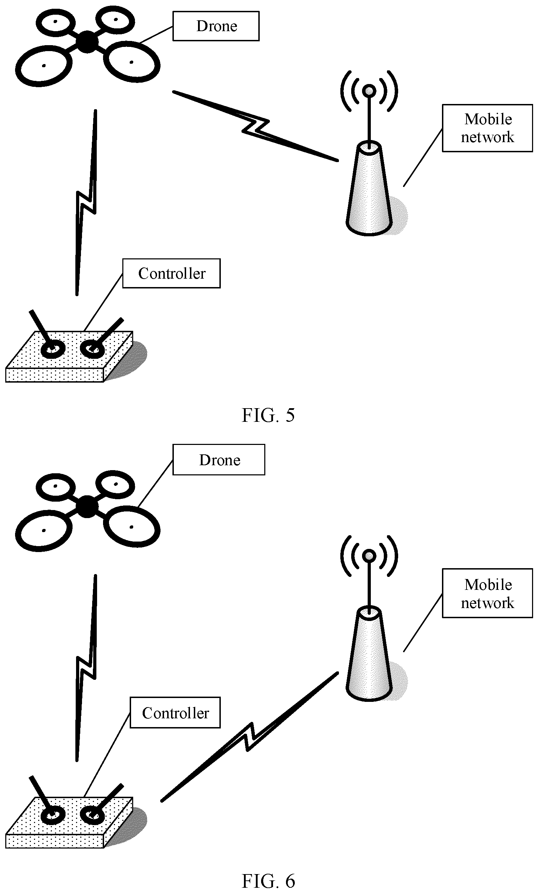

FIG. 3 to FIG. 6 are schematic diagrams of four possible scenarios in which drone systems (including drones and controllers of the drones) access mobile networks. In the scenario corresponding to FIG. 3, the controller of the drone is connected to an application server through an internet, the drone is connected to a mobile network by using a disposed mobile subscriber identity card, the application server accesses the mobile network, and the controller of the drone indirectly controls the drone via the application server. In the scenario corresponding to FIG. 4, the controller of the drone and the drone are each connected to a mobile network by using a disposed mobile subscriber identity card. In the scenario corresponding to FIG. 5, the controller of the drone controls the drone by using a proprietary radio frequency protocol of a device vendor, and the drone is still connected to a mobile network by using a disposed mobile subscriber identity card. In the scenario corresponding to FIG. 6, the controller of the drone controls the drone by using a proprietary radio frequency protocol of a device vendor, and the controller of the drone is connected to a mobile network by using a disposed mobile subscriber identity card.

When the target drone and the controller of the target drone correspond to the scenario corresponding to FIG. 5 or FIG. 6, the target drone communicates with the controller of the target drone by using the proprietary radio frequency protocol. In this case, a control range of the controller of the target drone for the target drone depends on a range of the radio frequency signal. Because the range of the radio frequency signal is relatively limited, performing drone control range verification on the target drone may not be considered. Certainly, to improve supervision strength, the drone control range verification may also be performed on the target drone. This is not limited in this application. When the target drone and the controller of the target drone correspond to the scenario corresponding to FIG. 3 or FIG. 4, theoretically, provided that a mobile network exists, the controller of the target drone can control the target drone. In this case, relative control range verification needs to be performed on the target drone.

A control range for the target drone may be information stored in the core network element, or may be information carried in the request message from the application server. The control range for the target drone may be a relative range or an absolute range. The relative range may correspond to an allowed maximum distance between the target drone and the controller of the target drone, and the absolute range may correspond to information about an allowed flight zone of the target drone. Therefore, the drone control range verification may specifically include at least one of relative control range verification and absolute control range verification.

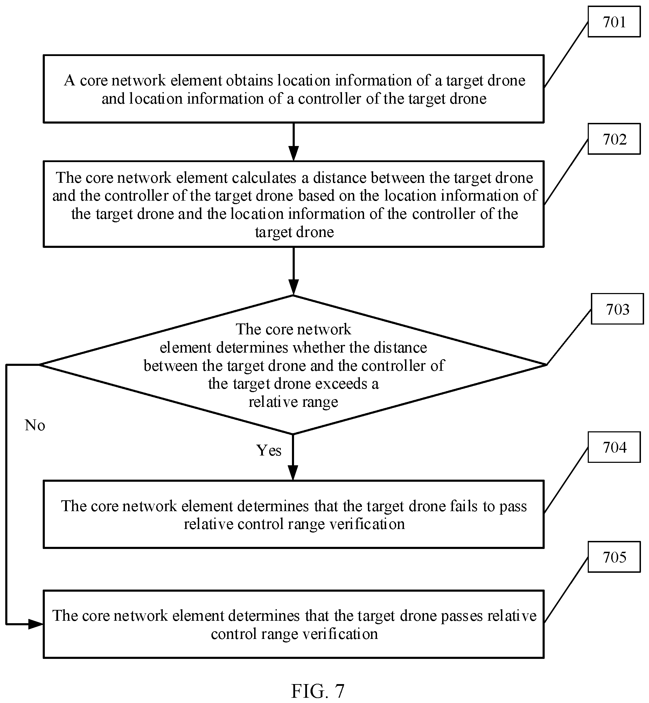

Referring to FIG. 7, a possible specific process of performing relative control range verification on the target drone by the core network element may include the following steps.

701: The core network element obtains the location information of the target drone and the location information of the controller of the target drone.

The core network element may obtain the location information of the target drone based on the identity information of the target drone, and obtain the location information of the controller of the target drone based on identity information of the controller of the target drone. For example, when both the target drone and the controller of the target drone are connected to a cellular network, the core network element may obtain the location information of the target drone based on a cellular network identifier of the target drone, and obtain the location information of the controller of the target drone based on a cellular network identifier of the controller of the target drone. For specific content of a process of obtaining the location information based on the identity information, refer to the foregoing descriptions of obtaining the location information of the target drone by the core network element based on the identity information of the target drone. Details are not described herein again. In the process in which the core network element obtains the location information of the target drone based on the identity information of the target drone, and obtains the location information of the controller of the target drone based on the identity information of the controller of the target drone, for a case in which the core network element needs to determine the identity information of the target drone and the identity information of the controller of the target drone based on the request message from the application server, the request message may include the identity information of the target drone and the identity information of the controller of the target drone. Alternatively, the application server may store a correspondence between the target drone and the controller of the target drone. Based on the correspondence between the target drone and the controller of the target drone, the application server may determine the identity information of one device based on the identity information of the other device. In this case, the request message may include the identity information of the target drone, the identity information of the controller of the target drone, or a target correspondence identifier. The target correspondence identifier is used to indicate the core network element to obtain the correspondence between the target drone and the controller of the target drone, to determine a network identifier of the target drone and a network identifier of the controller of the target drone.

702: The core network element calculates a distance between the target drone and the controller of the target drone based on the location information of the target drone and the location information of the controller of the target drone.

703: The core network element determines whether the distance between the target drone and the controller of the target drone exceeds a relative range, and if the distance exceeds the relative range, performs step 704, or if the distance does not exceed the relative range, performs step 705.

704: The core network element determines that the target drone fails to pass the relative control range verification.

705: The core network element determines that the target drone passes the relative control range verification.

If the distance between the target drone and the controller of the target drone exceeds the relative range, it indicates that the controller of the target drone possibly cannot control the target drone, or the controller of the target drone can control the target drone to perform a remote attack task. Therefore, in this case, the core network element may determine that the target drone fails to pass the relative control range verification.

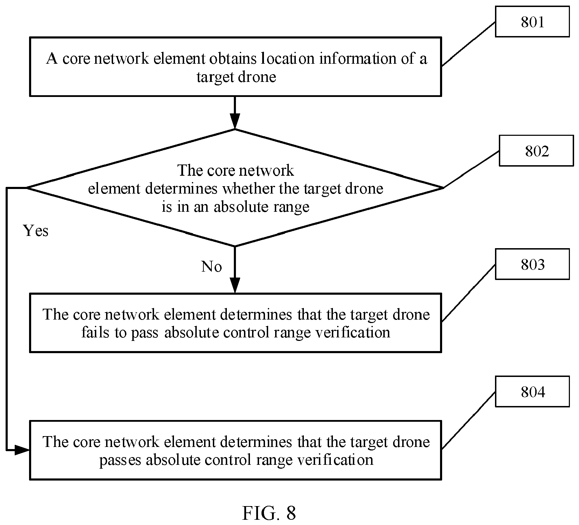

In some cases, for example, the core network element cannot obtain the location information of the controller of the target drone, or the core network element obtains the location information of the controller of the target drone in an internet manner but precision of the location information is excessively low, the core network element may perform absolute control range verification on the target drone. Referring to FIG. 8, a possible specific process of performing absolute control range verification on the target drone by the core network element may include the following steps.

801: The core network element obtains the location information of the target drone.

802: The core network element determines whether the target drone is in an absolute range, and if the target drone is not in the absolute range, performs step 803, or if the target drone is in the absolute range, performs step 804.

803: The core network element determines that the target drone fails to pass the absolute control range verification.

804: The core network element determines that the target drone passes the absolute control range verification.

For example, the absolute range may be coverage area information of a mobile network. The core network element may first obtain the location information of the target drone. Then, if the core network element determines that the target drone is not in a coverage area of the mobile network, it indicates that the target drone cannot communicate with the mobile network. In this case, the core network element may determine that the target drone fails to pass the absolute control range verification. Alternatively, the absolute range may be preset zone information. For example, if the home location of a mobile subscriber identity card disposed in the target drone is Guangdong Province, the absolute range may correspond to Guangdong Province. If determining that the target drone is not in Guangdong Province, the core network element may determine that the target drone fails to pass the absolute control range verification.

### (2) The target event includes the drone location verification.

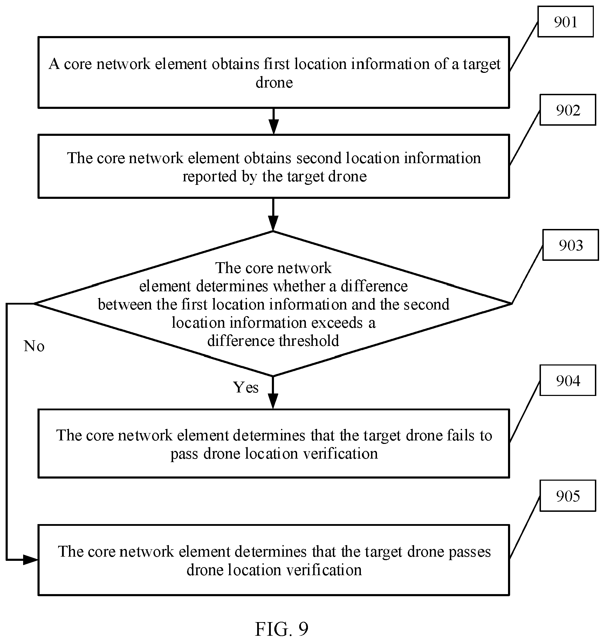

Referring to FIG. 9, a possible specific process of performing drone location verification on the target drone by the core network element may include the following steps.

901: The core network element obtains first location information of the target drone.

For example, when the target drone is connected to a mobile network, the core network element may obtain location information of the target drone based on a mobile network identifier of the target drone. For ease of differentiation, the location information of the target drone is referred to as first location information.

902: The core network element obtains second location information reported by the target drone.

For example, the request information from the application server may include location information reported by the target drone. For ease of differentiation, the location information reported by the target drone is referred to as second location information.

903: The core network element determines whether a difference between the first location information and the second location information exceeds a difference threshold, and if the difference exceeds the difference threshold, performs step 904, or if the difference does not exceed the difference threshold, performs step 905.

904: The core network element determines that the target drone fails to pass the drone location verification.

905: The core network element determines that the target drone passes the drone location verification.

The location information reported by the drone may be usually used as an important reference for supervising the drone. Accuracy of the reported location information affects supervision on the drone.

### (3) The target event includes the controlled zone verification.

The core network element may obtain location information of the target drone and controlled zone information. In a possible implementation, a method for obtaining the controlled zone information by the core network element may be: (1) The core network element pre-stores the controlled zone information, and may directly read the stored controlled zone information when performing controlled zone verification. (2) Alternatively, the request message from the application server may include the controlled zone information. The core network element may obtain the controlled zone information from the request message. The controlled zone information may include at least one of no-fly zone information and flight-restricted zone information. To implement objectives such as ensure public safety, some zones are usually defined as no-fly zones or flight-restricted zones. In a specified no-fly zone, a drone is generally prohibited from taking off and prohibited from flying from outside into the no-fly zone. In a flight-restricted zone, a flight parameter of a drone generally needs to be limited. For example, a flight speed or flight height of the drone may be limited. Limiting the flight parameter of the drone may specify that the drone flies according to a value of the flight parameter. For example, it is specified that the drone flies at a speed. Alternatively, limiting the flight parameter of the drone may specify an optional range of a value of the flight parameter of the drone. For example, it is specified that the flight height of the drone does not exceed 120 meters.

After obtaining the location information of the target drone and the controlled zone information, the core network element may determine, based on the obtained location information of the target drone and the obtained controlled zone information, whether the target drone is in a controlled zone; and if determining that the target drone is in the controlled zone, the core network element may determine that the target drone fails to pass the controlled zone verification. For example, when the controlled zone verification is no-fly zone verification, if the target drone fails to pass the verification, the target drone needs to be prohibited from taking off, or the target drone needs to be forced to fly out of the no-fly zone. When the controlled zone verification is flight-restricted zone verification, if the target drone fails to pass the verification, a flight parameter of the target drone needs to be limited.

### 2. The target event includes the statistical event.

The core network element may obtain information about a spatial region in which statistics are to be collected. For example, the core network element may obtain information about a specified supervised spatial region that is from the application server, and use the information about the specified supervised spatial region as the information about the spatial region in which statistics are to be collected. Alternatively, the core network element may determine the information about the spatial region in which statistics are to be collected. For example, the core network element may determine, based on location information of the target drone, the information about the spatial region in which statistics are to be collected. Specifically, for example, after obtaining the location information of the target drone, the core network element may determine information about a spatial region that has a radius of 1 kilometer and that is centered on a location of the target drone (where the spatial region may be a region within a range away from the surface), and use the information about the spatial region as the information about the spatial region in which statistics are to be collected.

After obtaining the information about the spatial region in which statistics are to be collected, the core network element may obtain statistical information of drones in the spatial region in which statistics are to be collected, for example, information about a quantity of the drones. The core network element performs the statistical event on the target drone, to help limit density of the drones in the spatial region and improve flight safety of the drones.

Specifically, in step 203, if the target event includes the statistical event, an execution result of the statistical event may include statistical information of drones in a spatial region. If the target event includes a verification event, an execution result of the verification event may include a verification result of the verification event, for example, a verification success or a verification failure. In addition, in a possible implementation, the execution result of the verification event may further include intermediate information obtained by the core network element in a process of executing the verification event, for example, a distance between the target drone and the controller of the target drone that is obtained through calculation when the core network element performs relative control range verification. Alternatively, in a possible implementation, the execution result of the verification event may further include result information of a step that is selected to be performed by the core network element based on the verification result. For example, after the core network element performs controlled zone verification to obtain a verification result, if the core network element determines that the target drone passes the verification, the core network element may determine, based on the location information of the target drone and the controlled zone information, risk information that the target drone enters a controlled zone. For example, the risk information that the target drone enters the controlled zone may be a minimum distance between the target drone and a boundary of the controlled zone, or may be duration required for the target drone to fly into the controlled zone. If the core network element determines that the target drone fails to pass the verification, for example, when the controlled zone is a no-fly zone, the core network element may determine a flight path along which the target drone flies out of the no-fly zone, to indicate the target drone to fly out of the no-fly zone according to the flight path. For example, the flight path that is obtained by the core network element and along which the drone flies out of the no-fly zone may be a shortest path along which the drone flies out of the no-fly zone, or may be a path on which public security is minimally affected.

Specifically, in step 204, if the execution result of the target event includes statistical information of drones in a spatial region, the flight control command from the core network element to the target drone may include the statistical information of drones in the spatial region, or may include flight alarm information. For example, when there are a large quantity of drones in the spatial region, the flight control command may be used to advise the target drone not to take off or to end a flight task as soon as possible.

In a possible implementation, if the execution result of the target event includes the verification result of the verification event, the application server may determine, based on the target information, whether the target drone violates a rule, and then send the flight control command to the target drone based on whether the target drone violates the rule. For example, if any verification result is a failure, the application server may determine that the target drone violates the rule. If the target drone executes a flight plan, a security problem is caused. In this case, the application server may send a mandatory management command to the target drone, for example, a command for prohibiting take-off, or a flight management command for the target drone. For example, the flight management command may include a command for instructing the target drone to hover, a command for instructing the target drone to land, a command for instructing the target drone to return, or a command for limiting a flight parameter. If determining that the target drone does not violate the rule, the application server may perform another operation, for example, not sending the flight control command to the target drone, or sending a command for allowing take-off to the target drone.

In addition, in a possible implementation, if the execution result of the target event includes the verification result of the verification event, the flight control command from the application server to the target drone may further include the intermediate information obtained by the core network element in the process of executing the verification event, or the result information of the step that is selected to be performed by the core network element based on the verification result. For specific content of the intermediate information and the result information of the step that is selected to be performed, refer to the corresponding descriptions in step 203. Details are not described herein again. For example, if it is determined that the target drone violates the rule, when the flight control command includes a return command, the flight control command may further include a specified return path. If it is determined that the target drone does not violate the rule, the flight control command may include the controlled zone information, risk information that the drone is predicted to enter the controlled zone, or the like.

Specifically, in step 205, when the target drone executes a flight task under control of the controller matching the target drone, in a possible implementation, the target drone is configured to preferentially execute the flight control command delivered by the application server. Specifically, when the target drone receives a first flight control command delivered by the application server and a second flight control command delivered by the controller of the target drone, the target drone may select the first flight control command from the first flight control command and the second flight control command based on priority information, and execute the first flight control command. The priority information is preset information, and is used to indicate that a priority of the first flight control command is higher than a priority of the second flight control command. In this case, even if the flight control command delivered by the application server to the drone conflicts with the flight control command delivered by the controller to the drone, the drone may subject to the flight control command from the application server. This helps enhance an effect of managing the drone by the application server, and reduce a threat brought by the drone to public security.

After receiving the request information from the application server, the core network element in the mobile network may execute the target event on the target drone based on the request information, to obtain the execution result of the target event. The execution result of the target event is used to supervise the target drone. Then, the core network element may return the response message including the execution result of the target event to the application server. The response message is used to assist the application server in supervising the target drone. Mobile networks can serve drones manufactured by different vendors, and the mobile networks are widely deployed in a region. Therefore, in this method embodiment of this application, the response message provided by the core network element to the application server helps the application server perform unified and extensive supervision on the drones.

The application server may send the request message to the core network element. When receiving the corresponding response message, the application server may obtain the execution result of executing the target event by the core network element on the target drone, and then send the flight control command to the target drone based on the target information including the execution result, to supervise the target drone. Mobile networks can serve drones manufactured by different vendors, and the mobile networks are widely deployed in a region. Therefore, in this method embodiment of this application, the application server obtains the response message from the core network element. This facilitates implementation of unified and extensive supervision on the drones.

During actual application, if the target event includes two or more events, for example, includes two or more verification events, when the application server sends the request message to the core network element, the request message may include a plurality of verification events. In this case, the application server sends the request message to indicate the core network element to execute the plurality of verification events. Alternatively, one request message may include one verification event, and the application server needs to send a plurality of request messages to indicate the core network element to execute a plurality of verification events. When receiving the plurality of verification events, the core network element may process the verification events at the same time, and a result of any verification event does not affect execution of another verification event. Alternatively, the core network element may process the verification events one by one. If an execution result of a verification event indicates that the target drone fails to pass the verification event, the core network element may not perform another verification event.

In a process of executing the target event, if the core network element processes the plurality of verification events, the core network element may immediately return one response message to the application server when obtaining a verification result of one verification event. The response message includes the verification result of the verification event. Alternatively, the core network element may return one response message to the application server after obtaining verification results of the plurality of verification events. The response message includes the verification results of the plurality of verification events.

In the embodiment in FIG. 2, the application server sends the flight control command to the drone. In another embodiment of this application, the core network element may send a flight control command to the drone. Specifically, in the embodiment corresponding to FIG. 2, after step 202, refer to a dashed line in FIG. 2. 206: The core network element sends a flight control command to the target drone based on whether the target drone violates a rule.

If the target event includes a verification event, the target event may further include an authorization decision event, and the core network element may determine, based on whether the target drone passes the verification event in the target event, whether the target drone violates the rule. For example, when an execution result of one verification event is a failure, the core network element may determine that the target drone violates the rule; or when execution results of a preset quantity of verification events are failures, the core network element may determine that the target drone violates the rule. For a process in which the core network element sends the flight control command to the target drone, refer to the process in which the application server sends the flight control command to the target drone based on the target information in step 204. Alternatively, the core network element may send the flight control command when determining that the target drone violates the rule. The flight control command may be a command for prohibiting take-off, or a flight management command for the target drone. For example, the flight management command may include a command for instructing the target drone to hover, a command for instructing the target drone to land, or a command for instructing the target drone to return.

The core network element may send the flight control command to the target drone via control plane signaling. For example, the control plane signaling may be non-access stratum (non-access stratum, NAS) signaling, and a non-access stratum is used as a function layer between the core network and user equipment.

Compared with the manner in which the application server sends the flight control command to the target drone, when determining that the target drone violates the rule, the core network element directly sends the control command to the target drone. This requires fewer steps and a shorter delay, so that the flight control command can reach the target drone earlier, thereby improving timeliness of drone supervision.

If the core network element determines that the target drone violates the rule, the core network element sends the flight control command to the target drone. In a possible implementation, a response message returned by the core network element to the application server may indicate that the core network element has sent the flight control command to the target drone. After receiving the indication, the application server may not need to send a flight control command to the target drone based on target information. Alternatively, when the target drone violates the rule, the core network element and the application server may each send a flight control command to the target drone, and the flight control command from the core network element may be the same as or different from the flight control command from the application server. For example, it is assumed that the flight control command from the core network element to the target drone is a mandatory management command, for example, a command for instructing the target drone to hover, the application server determines, based on the received response message, that the core network element has sent the mandatory management command. In this case, the flight control command from the application server to the target drone may include prompt information. For example, the prompt information indicates that the mandatory management command is delivered to the target drone because the target drone flies into a no-fly zone. The flight control command may further include no-fly zone information.

After the core network element sends the flight control command to the target drone, the target drone may execute the flight control command delivered by the core network element. Specific content of executing, by the target drone, the flight control command delivered by the core network element is similar to the foregoing specific descriptions of step 205. In a possible implementation, the target drone may be configured to preferentially execute the flight control command delivered by the core network element.

The following describes in detail the method embodiment corresponding to FIG. 2 by using an example in which the core network element in the embodiment corresponding to FIG. 2 is a core network element in a 5G network.

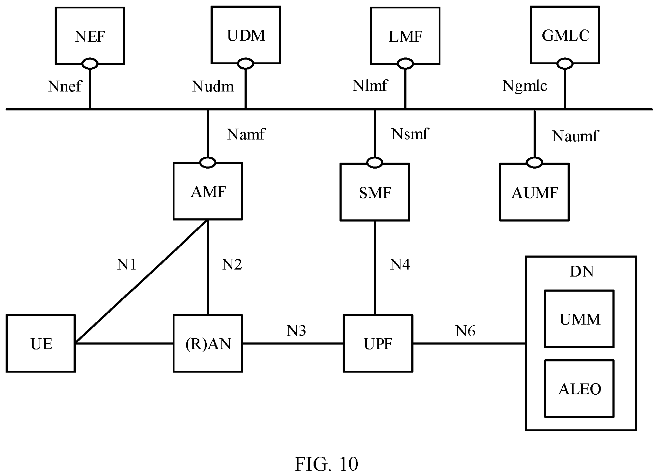

FIG. 10 is a schematic diagram of a network architecture to which a drone supervision method in this application is applied. User equipment (user equipment, UE), a (radio) access network ((radio) access network, (R)AN), a user plane function (user plane function, UPF) network element, and a data network (data network, DN) in FIG. 10 are generally referred to as user layer network functions or entities, and data traffic of a user may be transmitted through a data transmission channel established between the UE and the DN. Other network elements in FIG. 10 are referred to as control layer network functions or entities, and are mainly configured to implement reliable and stable transmission of user layer traffic. For example, a network exposure function (network exposure function, NEF) is mainly configured to securely expose a network capability and an event to a third party. A session management function (session management function, SMF) is mainly configured to select a user plane network element, redirect the user plane network element, allocate an IP address, establish, modify, and release a bearer, and the like. An access and mobility management function (access and mobility management function, AMF) is mainly responsible for signaling processing, for example, functions such as access control, mobility management, attach and detach, and gateway selection. A location management function (location management function, LMF) is mainly configured to perform location management. A unified data management (unified data management, UDM) may be configured to perform location management and subscription management. A gateway mobile location center (gateway mobile location center, GMLC) mainly provides interfaces for a user and service provider of a mobile location service. The AMF, the LMF, the UDM, and the GMLC may jointly perform a mobile positioning service. The mobile positioning service is that a mobile network operator determines a geographical location of a terminal device of a mobile user by using a dedicated mobile positioning technology, and provides a location-related service for the mobile user.

In the architecture shown in FIG. 10, the core network element further includes an assisted unmanned management function (assisted unmanned management function, AUMF) network element. The AUMF network element may be an independent network element, or may be integrated into another core network element. This is not limited herein. The DN includes an unmanned monitor and management (unmanned monitor and management, UMM) network element and an authorized law enforcement offices (authorized law enforcement offices, ALEO) network element.

The application server in the embodiment corresponding to FIG. 2 may include a UMM network element and/or an ALEO network element.

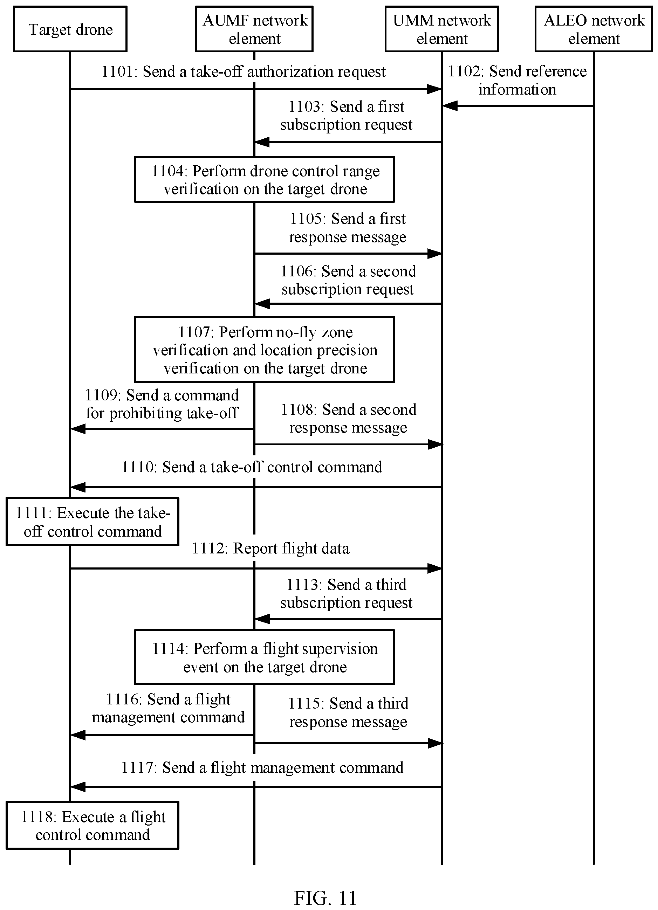

With reference to the network architecture shown in FIG. 10, based on the drone supervision method shown in FIG. 2, FIG. 11 is a flowchart of another drone supervision method of this application. Referring to FIG. 11, a mobile network-based drone supervision method of this application may specifically include the following steps.

1101: A target drone sends a take-off authorization request to a UMM network element.

According to legal requirements (which have been clearly specified in China and the United States), a user of a drone needs to register the identity of the user and the drone with a government department that is responsible for drone authorization. An ALEO network element can obtain identity registration information and device registration information that are reported by the user of the drone. The identity registration information may include identity information of the user of the drone, for example, a name, an ID card number, and a mobile phone number of the user. The device registration information may include a sequence number of the drone, a sequence number of a controller corresponding to the drone, and the like.

Before performing a flight task, the target drone may online send the take-off authorization request to the UMM network element. The take-off authorization request may include related information of the drone. For example, the take-off authorization request may include a sequence number and a mobile network identifier of each of the target drone and a controller of the target drone, and take-off location information, current location information, owner information (such as identity information and residential address information of an owner), a flight task type, flight path data, a take-off weight, and the like that are of the target drone.

1102: The UMM network element obtains reference information from the ALEO network element.

The reference information may include controlled zone information, the identity registration information and device registration information of the target drone, and the like. In this embodiment of this application, an example in which the controlled zone information is no-fly zone information is used.

Specifically, the UMM network element may request latest no-fly zone information, for example, drone fence information that has been clearly specified by the Civil Aviation Administration of China, from the ALEO network element. Alternatively, the ALEO network element may actively and periodically push no-fly zone information to the UMM network element.

The UMM network element may query, from the ALEO network element, the identity registration information and the device registration information that are reported by the user of the drone. Then, in a possible implementation, the UMM network element may perform identity verification on the target drone based on the identity registration information and the device registration information that are obtained from the ALEO network element. When determining that the owner of the target drone does not register the identity of the owner or the target drone with the ALEO, the UMM network element may determine that the target drone fails to pass the identity verification. In this case, feedback result information may be sent to the target drone. The result information indicates that the target drone fails to pass the identity verification, and advises the owner of the target drone to visit a relevant government department to check whether registration information of the target drone has been tampered with. If determining that the target drone passes the identity verification, the UMM network element may perform step 1103.

1103: The UMM network element sends a first subscription request of a drone control range verification event to an AUMF network element.

It is assumed that a scenario in which the target drone and the controller of the target drone access a mobile network is shown in FIG. 4. For example, the device registration information from the ALEO to the UMM network element may include the scenario in which the drone accesses the mobile network. After determining the scenario in which the target drone accesses the mobile network, the UMM network element may determine that relative control range verification needs to be performed on the target drone. In this case, the UMM network element may send a subscription request of the drone control range verification event to the AUMF network element. For ease of description, the subscription request is referred to as a first subscription request. The first subscription request may include: the sequence number and the mobile network identifier of the target drone, the sequence number and the mobile network identifier of the controller of the target drone, relative range information, error range requirement information, and the like.

1104: The AUMF network element performs drone control range verification on the target drone based on the first subscription request.

After receiving the first subscription request, the AUMF network element may perform the drone control range verification event on the target drone. Specifically, that the AUMF network element performs the relative control range verification on the target drone based on the first subscription request may include the following processes.
(1) The AUMF network element may obtain the location information of the target drone and location information of the controller of the target drone. It is assumed that the AUMF network element obtains the location information of the target drone and the location information of the controller of the target drone from an AMF network element or an LMF network element. More specifically, the AUMF network element may obtain a location of the target drone and a location of the controller of the target drone by subscribing to a location event of the AMF network element, or obtain the location information of the target drone and the location information of the controller of the target drone by initiating a network-initiated location request procedure. For example, the AMF network element may provide, based on the received subscription request of the location event, coarse-grained location information of UE, for example, information such as an identifier of a cell in which the UE is located.
   It should be noted that the AUMF network element may be integrated into an existing core network element such as the AMF network element or the LMF network element. When the AUMF network element is integrated into the AMF network element or the LMF network element, after receiving the first subscription request, the AUMF network element can directly obtain the location information of the target drone and the location information of the controller of the target drone.
(2) The AUMF network element obtains a distance between the target drone and the controller of the target drone based on the location information of the target drone and the location information of the controller of the target drone, and then determines, based on the error range requirement information, whether the distance between the target drone and the controller of the target drone exceeds a relative range. If the distance exceeds the relative range, the AUMF network element may determine that the target drone fails to pass the relative control range verification. If the distance does not exceed the relative range, AUMF network element may determine that the target drone passes the relative control range verification.

That the AUMF performs absolute control range verification on the target drone based on the first subscription request may include the following processes.
(1) The AUMF may obtain the location information of the target drone. For an obtaining process, refer to the corresponding content of performing the relative control range verification on the target drone by the AUMF based on the first subscription request.
(2) The AUMF determines whether the target drone is in an absolute range. If the target drone is not in the absolute range, the AUMF may determine that the target drone fails to pass the absolute control range verification. If the target drone is in the absolute range, the AUMF may determine that the target drone passes the absolute control range verification.

1105: The AUMF network element returns a first response message corresponding to the first subscription request to the UMM network element.

The first response message may include an execution result of the first subscription request, for example, may include a verification result of the drone control range verification performed on the target drone, and may further include the obtained distance between the target drone and the controller of the target drone.

1106: The UMM network element sends a second subscription request to the AUMF network element.

The AUMF network element may be responsible for performing controlled zone verification and location precision verification on the drone, and may also provide a service for the UMM network element through subscription of an event. When the first response message indicates that the target drone passes the drone control range verification, the UMM network element may send a second subscription request of a controlled zone verification event and location precision verification event to the AUMF network element. The second subscription request may include: the sequence number and the mobile network identifier of the target drone, the controlled zone information (the drone fence information), the error range requirement information, positioning precision requirement information, and the like.

1107: The AUMF network element performs no-fly zone verification and location precision verification on the target drone based on the second subscription request.

Assuming that the controlled zone information is no-fly zone information, that the AUMF network element performs the no-fly zone verification on the target drone based on the second subscription request may include:
(1) The AUMF network element obtains the location information of the target drone. For example, the AUMF may obtain the location information of the target drone from the access and mobility management function AMF or the location management function LMF. For details, refer to the corresponding descriptions in step 704.
(2) The AUMF network element determines, based on the error range requirement information, whether the target drone is in a no-fly zone. If determining that the target drone is in the no-fly zone, the AUMF network element may determine that the target drone fails to pass the no-fly zone verification. If determining that the target drone is not in the no-fly zone, AUMF network element may determine that the target drone passes the no-fly zone verification.

That the AUMF network element performs the location precision verification on the target drone based on the second subscription request may include:
The AUMF network element may obtain the location information of the target drone, and then determine, based on the error range requirement information, the current location information in the take-off authorization request, and the obtained location information, whether location information reported by the target drone meets a positioning precision requirement.

1108: The AUMF network element returns a second response message corresponding to the second subscription request to the UMM network element.

The second response message may include a verification result of the no-fly zone verification and a verification result of the location precision verification. If the target drone is not in the no-fly zone, the second response message may further include risk information that the target drone enters the no-fly zone.

1109: The AUMF network element sends a command for prohibiting take-off to the target drone.

The AUMF network element may perform authorization decision on the target drone based on the execution result of the first subscription request and an execution result of the second subscription request. When a decision result indicates that the target drone fails to pass the verification, the AUMF network element may send the command for prohibiting take-off to the target drone. For example, when the drone control range verification or the no-fly zone verification fails, the AUMF network element has a right to directly reject the take-off authorization request of the target drone, and notify, via NAS signaling, the drone device of the command for prohibiting take-off.

1110: The UMM network element sends, to the target drone, a take-off control command corresponding to the take-off authorization request.

The UMM network element may perform the authorization decision on the target drone based on the first response message, the second response message, a result of the identity verification, and the like, to obtain the take-off control command, for example, a command for allowing take-off or a command for prohibiting take-off, and return the take-off control command to the target drone.

1111: The target drone executes the take-off control command.

1112: The target drone reports flight data to the UMM network element.

If the target drone receives the command for allowing take-off, the target drone may periodically send the flight data to the UMM network element in a flight process. The flight data may include the sequence numbers and the mobile network identifiers of the target drone and the controller of the target drone, and the current location information, the owner information (for example, the identity information and residential address information of the owner), the flight path data, and the like that are of the target drone.

1113: The UMM network element sends a third subscription request to the AUMF network element.

The third subscription request may include a flight supervision event.

1114: The AUMF network element performs the flight supervision event in the third subscription request on the target drone.

The flight supervision event may specifically include at least one of the drone control range verification, the controlled zone verification, and the location precision verification in step 1104 and step 1107. For an execution process of each verification event, refer to the foregoing corresponding content. Details are not described herein again.

1115: The AUMF network element returns a third response message corresponding to the third subscription request to the UMM network element.

1116: The AUMF network element sends a flight management command to the target drone.

When the AUMF network element performs authorization decision on the target drone based on an execution result of the third subscription request, and a decision result indicates that the target drone fails to pass the verification, the AUMF network element may send the flight management command to the target drone. For example, the flight management command may include a command for hovering, landing, automatic return, or alarming.

1117: The UMM network element sends a flight management command to the target drone based on the third response message.

After the UMM network element performs authorization decision on the target drone based on the execution result of the third subscription request or the execution result of the identity verification, when an authorization result indicates that the target drone fails to pass the verification, the UMM network element may send the flight management command to the target drone. For example, the flight management command may include a command for hovering, landing, automatic return, or alarming.

In addition, the UMM network element may further predict a flight path of the target drone based on the flight data periodically reported by the target drone, and then estimate duration required for the target drone to fly into the no-fly zone and a potential drone collision event. If the authorization result indicates that the target drone passes the verification, the UMM network element may send alarm information to the target drone, for example, duration required for the target drone to fly into the no-fly zone and a potential drone collision event.

1118: The target drone executes a flight control command.

In the embodiment corresponding to FIG. 11, for details of content that is the same as that in the embodiment corresponding to FIG. 2, refer to the embodiment corresponding to FIG. 2. Details are not described herein again.

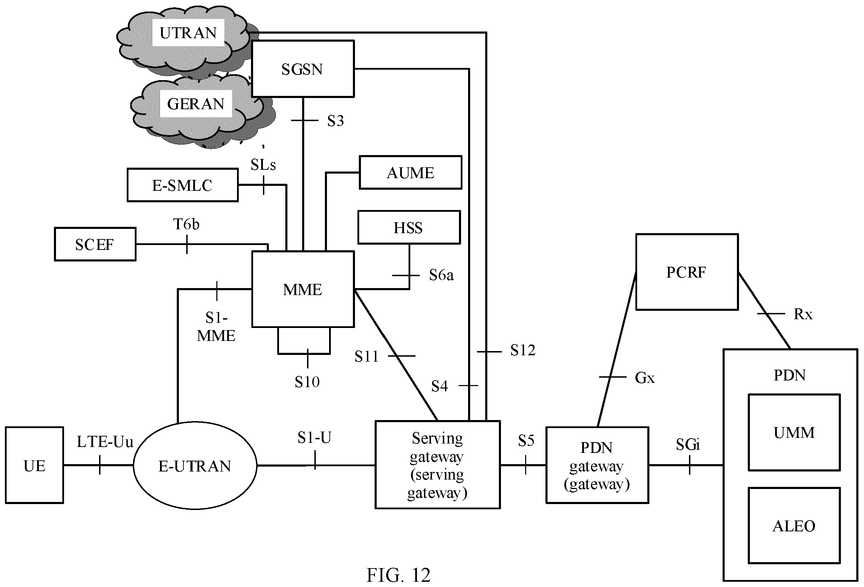

Alternatively, the core network element in the embodiment corresponding to FIG. 2 may be a core network element in another mobile network architecture. With reference to FIG. 12, an example in which the core network element in the embodiment corresponding to FIG. 2 is a core network element in a 4G network is used, the AUMF network element in the network architecture corresponding to FIG. 10 corresponds to an assisted unmanned management entity (assisted unmanned management entity, AUME) network element in FIG. 12, and the AUME is directly connected to a mobility management entity (mobility management entity, MME) in the 4G network. All or some functions of the AUME may alternatively be integrated into another core network element, for example, an MME. This is not limited herein. The (R)AN in the network architecture corresponding to FIG. 10 corresponds to an evolved universal terrestrial radio access network (evolved universal terrestrial radio access network, E-UTRAN) in FIG. 12, the AMF in the network architecture corresponding to FIG. 10 corresponds to the MME in FIG. 12, the LMF in the network architecture corresponding to FIG. 10 corresponds to an evolved serving mobile location center (evolved serving mobile location center, E-SMLC) in FIG. 12, the NEF in the network architecture corresponding to FIG. 10 corresponds to a service capability exposure unit (service capability exposure function, SCEF) in FIG. 12, and the DN in the network architecture corresponding to FIG. 10 corresponds to a packet data network (packet data network, PDN) in FIG. 12. For a drone supervision method based on the 4G network architecture of this application, refer to the drone supervision method corresponding to FIG. 11. Details are not described herein again.

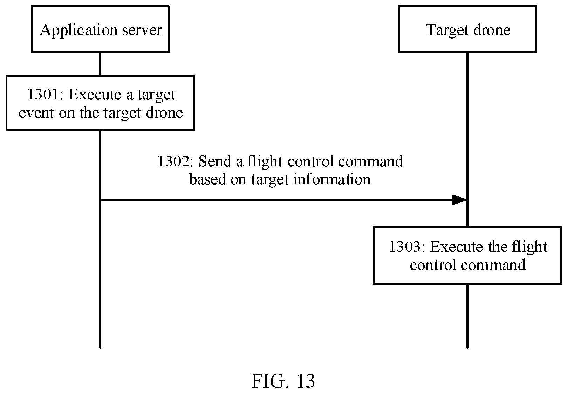

In the embodiment in FIG. 2, the core network element executes the target event on the target drone based on the request message from the application server. In another embodiment, an application server may execute a target event on a target drone. Specifically, referring to FIG. 13, another embodiment of this application provides a drone supervision method. The method includes the following steps.

1301: An application server executes a target event on a target drone.

A process in which the application server executes the target event on the target drone is similar to the process in which the core network element executes the target event on the target drone in step 202. Therefore, for specific descriptions of step 1301, refer to the corresponding descriptions in the content corresponding to step 202. For example, the core network element in step 202 is replaced with the application server.

It should be noted that, different from the manner in which the core network element obtains location information of the device in step 202, the application server needs to send a location request to the core network element to obtain location information of the device that is obtained in a cellular manner.

1302: The application server sends a flight control command to the target drone based on target information via a mobile network. The target information includes an execution result of the target event.

A process in which the application server sends, based on the target information, the flight control command to the target drone via the mobile network is similar to the process in which the application server sends the flight control command to the target drone based on the target information in the embodiment corresponding to FIG. 2. Therefore, for specific descriptions of step 1302, refer to the corresponding descriptions in the content corresponding to step 204. Details are not described herein again.

1303: The target drone executes the flight control command.

For specific content of executing, by the target drone, the flight control command from the application server, refer to the specific descriptions of step 205. Details are not described herein again.

The application server may execute the target event on the target drone to obtain the execution result of the target event, then determine the flight control command for the target drone based on the target information, and send the flight control command to the target drone via the mobile network, to supervise the target drone. The target information includes the execution result of the target event. Mobile networks can serve drones manufactured by different vendors, and the mobile networks are widely deployed in a region. Therefore, according to the mobile network-based drone supervision method in this application, unified and extensive supervision can be implemented on the drones.

The following describes in detail the method embodiment corresponding to FIG. 13 by using an example in which the embodiment corresponding to FIG. 13 is based on a 5G network.

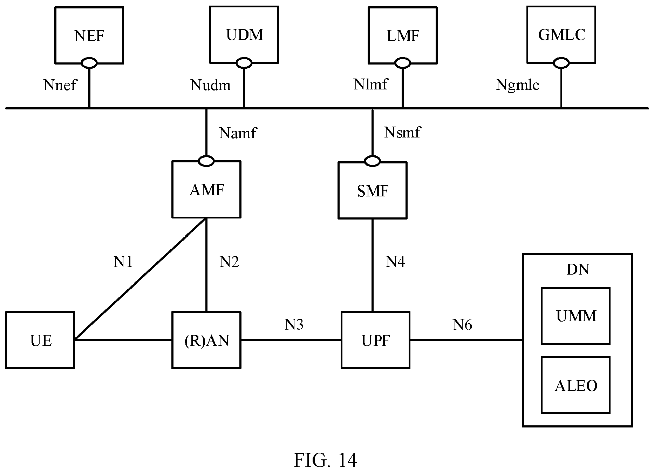

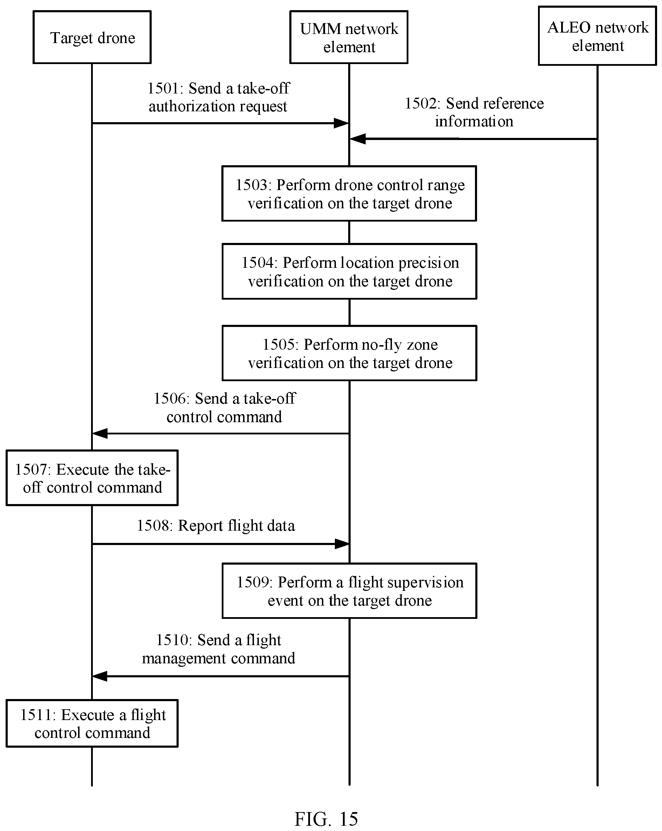

FIG. 14 is a schematic diagram of another network architecture used in a drone supervision method of this application. For specific content of each network element in FIG. 14, refer to the corresponding descriptions of the network architecture corresponding to FIG. 10. With reference to the network architecture shown in FIG. 14, based on the drone supervision method shown in FIG. 13, FIG. 15 is a flowchart of another drone supervision method of this application. Referring to FIG. 15, a mobile network-based drone supervision method of this application may specifically include the following steps.

1501: A target drone sends a take-off authorization request to a UMM network element.

1502: The UMM network element obtains reference information from an ALEO network element.

For step 1501 and step 1502, refer to step 1101 and step 1102 in the method embodiment corresponding to FIG. 11. Details are not described herein again.

1503: The UMM network element performs a drone control range verification event on the target drone.

For a specific process, refer to step 1104 in the method embodiment corresponding to FIG. 11. Details are not described herein again.

1504: The UMM network element performs location precision verification on the target drone.

1505: The UMM network element performs no-fly zone verification on the target drone.

The UMM network element may perform the no-fly zone verification and the location precision verification on the drone. For a specific process, refer to step 1107 in the method embodiment corresponding to FIG. 11. Details are not described herein again.

It should be noted that, in step 1503 to step 1505, if an application server performs the foregoing verification by using location information obtained in a cellular manner, different from the manner in which the AUMF network element obtains the location information in the embodiment corresponding to FIG. 11, the application server needs to send a location request to a core network element to obtain the location information of the device obtained in the cellular manner. For example, the application server may obtain the location information of the target drone (or a controller of the drone) by subscribing to a location event of an AMF, or obtain the location information by initiating termination of a location request procedure by a terminal.

1506: The UMM network element sends, to the target drone, a take-off control command corresponding to the take-off authorization request.

The UMM network element may perform authorization decision on the target drone based on a result of the relative control range verification, a result of the location precision verification, a result of the no-fly zone verification, a result of identity verification, and the like, to obtain the take-off control command, for example, a command for allowing take-off or a command for prohibiting take-off, and return the take-off control command to the target drone.

1507: The target drone executes the take-off control command.

1508: The target drone reports flight data.

For step 1508, refer to step 1112 in the method embodiment corresponding to FIG. 11. Details are not described herein again.

1509: The UMM network element performs a flight supervision event on the target drone.

The flight supervision event may include at least one of the drone control range verification, the no-fly zone verification, and the location precision verification in step 1503 to step 1505. For an execution process of each verification event, refer to the foregoing corresponding content. Details are not described herein again.

1510: The UMM network element sends a flight management command to the target drone.

After the UMM network element performs authorization decision on the target drone based on an execution result of the flight supervision event or the execution result of the identity verification, when an authorization result indicates that the target drone fails to pass the verification, the UMM network element may send the flight management command to the target drone. For example, the flight management command may include a command for hovering, landing, automatic return, or alarming.

In addition, the UMM network element may further predict a flight path of the target drone based on the flight data periodically reported by the target drone, and then estimate duration required for the target drone to fly into the no-fly zone and a potential drone collision event. If the authorization result indicates that the target drone passes the verification, the UMM network element may send alarm information to the target drone, for example, duration required for the target drone to fly into the no-fly zone and a potential drone collision event.

1511: The target drone executes a flight control command.

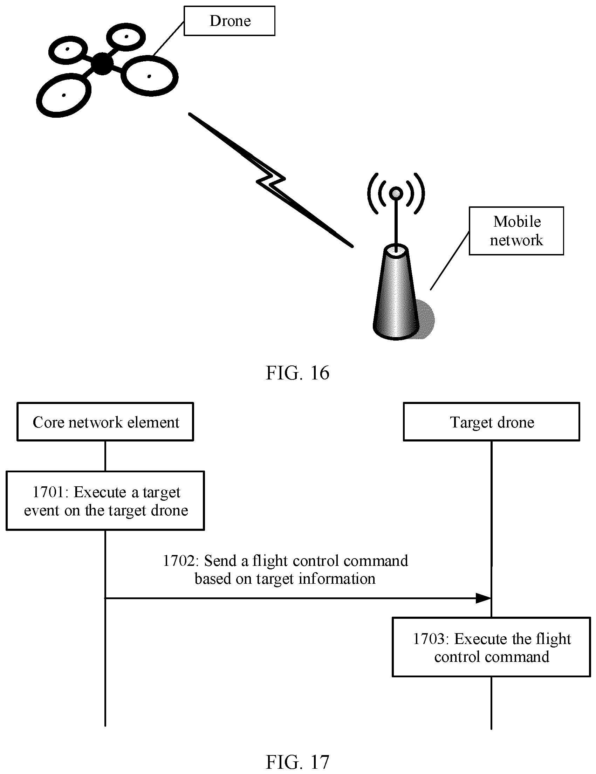

The foregoing describes method embodiments based on the drone supervision system corresponding to FIG. 1. FIG. 16 is a schematic diagram of another embodiment of a mobile network-based drone supervision system according to this application. The drone supervision system corresponding to FIG. 16 includes a mobile network (where a base station in the figure represents the mobile network) and a drone. Data transmission may be performed between the drone and the mobile network. For detailed descriptions of the drone supervision system corresponding to FIG. 16, refer to the foregoing corresponding descriptions of the drone supervision system corresponding to FIG. 1. Details are not described herein again.

In the embodiment in FIG. 2, the core network element executes the target event on the target drone based on the request message from the application server. In another embodiment, a core network element may autonomously execute a target event on a target drone. Specifically, based on the drone supervision system corresponding to FIG. 16, referring to FIG. 17, another embodiment of this application provides a drone supervision method. The method includes the following steps.

1701: A core network element executes a target event on a target drone.

In a possible manner, the core network element may pre-configure the target event. Alternatively, in another possible manner, the core network element may receive configuration information that is of the target event and that is from another network element. A process in which the core network element executes the target event on the target drone is similar to the process in which the core network element executes the target event on the target drone in step 202. Therefore, for specific descriptions of step 1701, refer to the corresponding descriptions in the content corresponding to step 202.

1702: The core network element sends a flight control command to the target drone based on target information. The target information includes an execution result of the target event.

A process in which the core network element sends the flight control command to the target drone based on the target information is similar to the process in which the application server sends the flight control command to the target drone based on the target information in the embodiment corresponding to FIG. 2. Therefore, for specific content of step 1702, refer to the corresponding descriptions in the content corresponding to step 204 in the embodiment corresponding to FIG. 2. Details are not described herein again.

1703: The target drone executes the flight control command.

After the core network element sends the flight control command to the target drone, the target drone may execute the flight control command delivered by the core network element. Specific content of executing, by the target drone, the flight control command delivered by the core network element is similar to the specific descriptions of step 205. In a possible implementation, the target drone may be configured to preferentially execute the flight control command delivered by the core network element.

A core network element of a mobile network may execute a target event on a target drone to obtain an execution result of the target event, and then send a flight control command to the target drone based on target information, to supervise the target drone. The target information includes the execution result of the target event. Mobile networks can serve drones manufactured by different vendors, and the mobile networks are widely deployed in a region. Therefore, according to the mobile network-based drone supervision method in this application, unified and extensive supervision can be implemented on the drones.

The following describes in detail the method embodiment corresponding to FIG. 17 by using an example in which the core network element in the embodiment corresponding to FIG. 17 is a core network element in a 5G network.

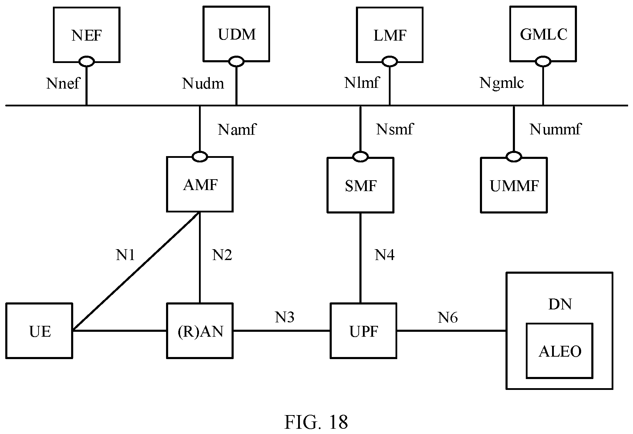

FIG. 18 is a schematic diagram of another network architecture used in a drone supervision method of this application. For specific content of each network element in FIG. 18, refer to the corresponding descriptions of the first type of network architecture corresponding to FIG. 10. In the architecture shown in FIG. 18, a core network element further includes an unmanned monitor and management function (unmanned monitor and management function, UMMF) network element. The UMMF network element may be an independent network element, or may be integrated into another core network element. This is not limited herein. A DN includes an authorized law enforcement offices (authorized law enforcement offices, ALEO) network element.

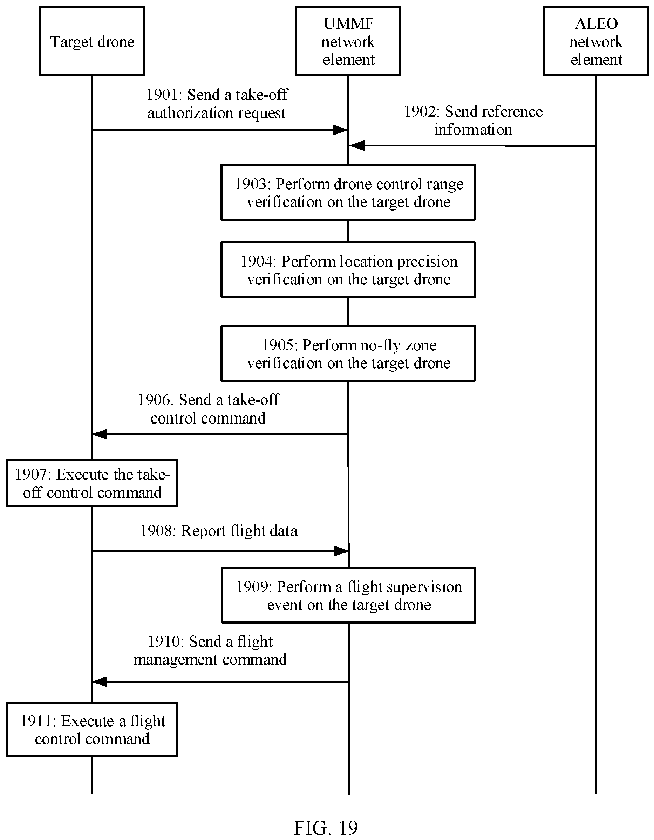

With reference to the network architecture shown in FIG. 18, based on the drone supervision method shown in FIG. 17, FIG. 19 is a flowchart of another drone supervision method of this application. Referring to FIG. 19, a mobile network-based drone supervision method of this application may specifically include the following steps.

1901: A target drone sends a take-off authorization request to a UMMF network element.

1902: The UMMF network element obtains reference information from an ALEO network element.

For step 1901 and step 1902, refer to step 1101 and step 1102 in the method embodiment corresponding to FIG. 11. Details are not described herein again.

1903: The UMMF network element performs a drone control range verification event on the target drone.

For a specific process, refer to step 1104 in the method embodiment corresponding to FIG. 11. Details are not described herein again.

1904: The UMMF network element performs location precision verification on the target drone.

1905: The UMMF network element performs no-fly zone verification on the target drone.

The UMMF network element may perform the no-fly zone verification and the location precision verification on the drone. For a specific process, refer to step 1107 in the method embodiment corresponding to FIG. 11. Details are not described herein again.

1906: The UMMF network element sends, to the target drone, a take-off control command corresponding to the take-off authorization request.

The UMMF network element may perform authorization decision on the target drone based on a result of the relative control range verification, a result of the location precision verification, a result of the no-fly zone verification, a result of identity verification, and the like, to obtain the take-off control command, for example, a command for allowing take-off or a command for prohibiting take-off, and return the take-off control command to the target drone.

1907: The target drone executes the take-off control command.

1908: The target drone reports flight data.

For step 1908, refer to step 1112 in the method embodiment corresponding to FIG. 11. Details are not described herein again.

1909: The UMMF network element performs a flight supervision event on the target drone.

The flight supervision event may include at least one of the drone control range verification, the no-fly zone verification, and the location precision verification in step 1903 to step 1905. For an execution process of each verification event, refer to the foregoing corresponding content. Details are not described herein again.

1910: The UMMF network element sends a flight management command to the target drone.

After the UMMF network element performs authorization decision on the target drone based on an execution result of the flight supervision event or the execution result of the identity verification, when an authorization result indicates that the target drone fails to pass the verification, the UMMF network element may send the flight management command to the target drone. For example, the flight management command may include a command for hovering, landing, automatic return, or alarming.

In addition, the UMMF network element may further predict a flight path of the target drone based on the flight data periodically reported by the target drone, and then estimate duration required for the target drone to fly into the no-fly zone and a potential drone collision event. If the authorization result indicates that the target drone passes the verification, the UMMF network element may send alarm information to the target drone, for example, duration required for the target drone to fly into the no-fly zone and a potential drone collision event.

1911: The target drone executes the flight control command.

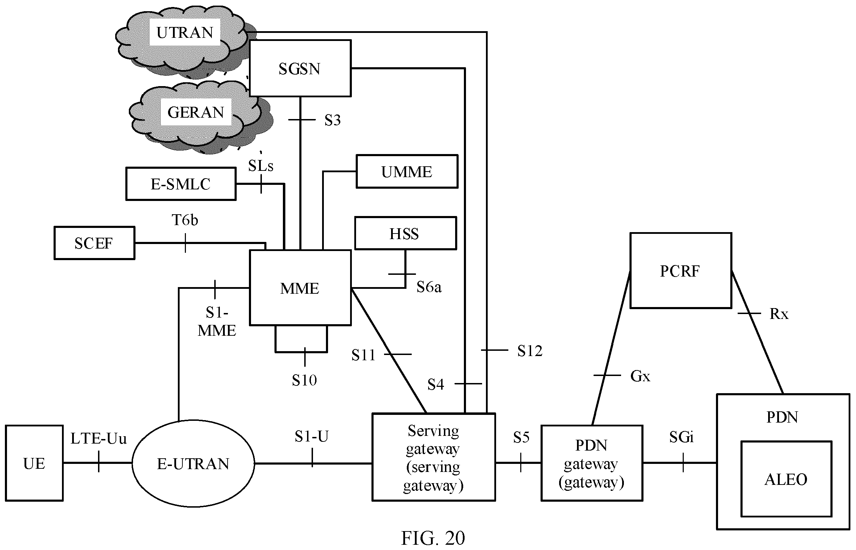

Alternatively, the core network element in the embodiment corresponding to FIG. 17 may be a core network element in another mobile network architecture. With reference to FIG. 20, an example in which the core network element in the embodiment corresponding to FIG. 17 is a core network element in a 4G network is used, the UMMF network element in the network architecture corresponding to FIG. 18 corresponds to an unmanned monitor and management entity (unmanned monitor and management entity, UMME) network element in FIG. 20, and the UMME is directly connected to an MME in FIG. 20. All or some functions of the UMME may alternatively be integrated into another core network element, for example, the MME. This is not limited herein. The (R)AN in the network architecture corresponding to FIG. 18 corresponds to an E-UTRAN in FIG. 20, the AMF in the network architecture corresponding to FIG. 18 corresponds to the MME in FIG. 20, the LMF in the network architecture corresponding to FIG. 18 corresponds to an E-SMLC in FIG. 20, the NEF in the network architecture corresponding to FIG. 18 corresponds to an SCEF in FIG. 20, and the DN in the network architecture corresponding to FIG. 18 corresponds to a PDN in FIG. 20. For a drone supervision method based on the 4G network architecture of this application, refer to the drone supervision method corresponding to FIG. 19. Details are not described herein again.

The foregoing mainly describes the solutions provided in the embodiments of this application from a perspective of interaction between the network elements. It may be understood that to implement the foregoing functions, the foregoing core network element, application server, and drone each include a corresponding hardware structure and/or software module for implementing each function. A person skilled in the art should easily be aware that, in combination with functions described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

From a perspective of a physical device, the foregoing core network element, application server, or drone may be implemented by a physical device, may be implemented jointly by a plurality of physical devices, or may be a logical function unit inside a physical device. This is not specifically limited in the embodiments of this application.

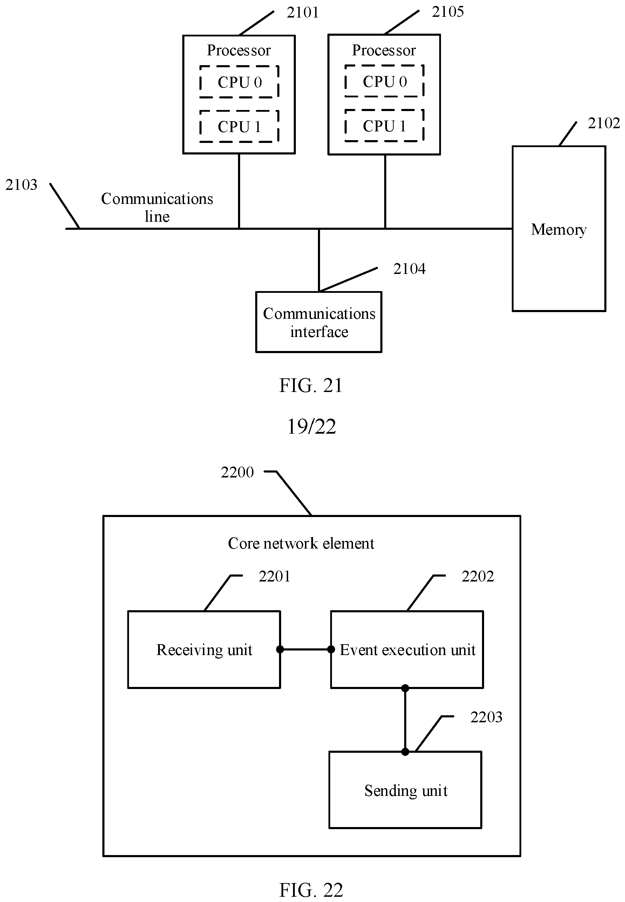

For example, the foregoing core network element, application server, or drone may be implemented by a communications device in FIG. 21. FIG. 21 is a schematic diagram of a hardware structure of a communications device according to an embodiment of this application. The communications device includes at least one processor 2101, a memory 2102, a communications line 2103, and at least one communications interface 2104.

The processor 2101 may be a general-purpose central processing unit (central processing unit, CPU), a microprocessor, an application-specific integrated circuit (application-specific integrated circuit, server IC), or one or more integrated circuits configured to control program execution of the solutions of this application.

The communications line 2103 may include a path for transmitting information between the foregoing components.

The communications interface 2104 is an apparatus using any transceiver, and is configured to communicate with another device or communications network such as the Ethernet, a radio access network (radio access network, RAN), or a wireless local area network (wireless local area networks, WLAN).

The memory 2102 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM), or another compact disc storage or optical disc storage (including a compressed optical disc, a laser disc, an optical disc, a digital versatile disc, a Bluray optical disc, and the like), a magnetic disk storage medium or another magnetic storage device, or any other medium capable of including or storing expected program code in a form of instructions or data structures and capable of being accessed by a computer, but is not limited thereto. The memory may exist independently, and is connected to the processor 2101 through the communications line 2103. The memory 2102 may alternatively be integrated with the processor 2101.

The memory 2102 is configured to store a computer execution instruction for executing the solutions of this application, and the processor 2101 controls execution of the computer execution instruction. The processor 2101 is configured to execute the computer execution instruction stored in the memory 2102, to implement the mobile network-based drone supervision method provided in the foregoing method embodiments of this application.

In a possible implementation, the computer execution instruction in this embodiment of this application may also be referred to as application program code. This is not specifically limited in this embodiment of this application.

During specific implementation, in an embodiment, the processor 2101 may include one or more CPUs, for example, a CPU 0 and a CPU 1 in FIG. 21.

During specific implementation, in an embodiment, the communications device may include a plurality of processors, for example, the processor 2101 and a processor 2105 in FIG. 21. Each of the processors maybe a single-core (single-CPU) processor or a multi-core (multi-CPU) processor. The processor herein may be one or more devices, circuits, and/or processing cores for processing data (for example, the computer execution instruction).

From a perspective of a function unit, the core network element, the application server, and the drone in this application may be divided into function units based on the foregoing method embodiments. For example, each function unit may be obtained through division based on each corresponding function, or two or more functions may be integrated into one function unit. The integrated function unit may be implemented in a form of hardware, or may be implemented in a form of a software function unit.

For example, when function units are divided through integration, FIG. 22 is a schematic structural diagram of a core network element. As shown in FIG. 22, an embodiment of the core network element 2200 of this application may include a receiving unit 2201, an event execution unit 2202, and a sending unit 2203.

The receiving unit 2201 is configured to receive a request message from an application server. The request message includes a target event executed on a target drone.

The event execution unit 2202 is configured to execute the target event on the target drone based on the request message.

The sending unit 2203 is configured to return a response message to the application server. The response message includes an execution result of the target event.

After the receiving unit 2201 in the core network element receives the request information from the application server, the event execution unit 2202 may execute the target event on the target drone based on the request information, to obtain the execution result of the target event. The execution result of the target event is used to supervise the target drone. Then, the sending unit 2203 may return the response message including the execution result of the target event to the application server. The response message is used to assist the application server in supervising the target drone. Mobile networks can serve drones manufactured by different vendors, and the mobile networks are widely deployed in a region. Therefore, in this apparatus embodiment of this application, the response message provided by the core network element to the application server helps the application server perform unified and extensive supervision on the drones.

In some embodiments of this application, the target event includes a verification event.

In some embodiments of this application, the verification event includes at least one of drone control range verification, drone location verification, and controlled zone verification.

In some embodiments of this application, if the target event includes the drone control range verification, the event execution unit 2202 is configured to:
determine, based on obtained location information of the target drone and obtained location information of a controller of the target drone, whether the target drone is within a control range of the controller of the target drone.

In some embodiments of this application, the request message further includes identity information of the target drone, and
the event execution unit 2202 is further configured to obtain the location information of the target drone based on the identity information of the target drone.

In some embodiments of this application, if the target event includes the drone location verification, the event execution unit 2202 is configured to:
determine, based on location information reported by the target drone and obtained location information of the target drone, whether a location of the target drone is accurate.

In some embodiments of this application, the request message further includes identity information of the target drone, and
the event execution unit 2202 is further configured to obtain the location information of the target drone based on the identity information of the target drone.

In some embodiments of this application, if the target event includes the controlled zone verification, the event execution unit 2202 is configured to:
determine, based on obtained location information of the target drone and controlled zone information, whether a location of the target drone is in a controlled zone.

In some embodiments of this application, the request message further includes the controlled zone information, and
the event execution unit 2202 is further configured to obtain the location information of the target drone based on identity information of the target drone.

In some embodiments of this application, the event execution unit 2202 is further configured to:
if determining that the location of the target drone is not in the controlled zone, determine, based on the location information of the target drone and the controlled zone information, risk information that the target drone enters the controlled zone.

In some embodiments of this application, if the controlled zone information is no-fly zone information, the event execution unit 2202 is further configured to:
if determining that the location of the target drone is in a no-fly zone, determine a flight path along which the target drone flies out of the no-fly zone.

In some embodiments of this application, the target event further includes authorization decision, and the event execution unit 2202 is configured to:
determine, based on whether the target drone passes the verification event, whether the target drone violates a rule.

In some embodiments of this application, the sending unit 2203 is further configured to:
send a flight control command to the target drone based on whether the target drone violates the rule.

In some embodiments of this application, the flight control command is sent to the target drone via control plane signaling.

In some embodiments of this application, the flight control command includes a command indicating whether take-off is allowed, or a flight management command for the target drone.

In some embodiments of this application, the flight management command includes a command for instructing the target drone to hover, a command for instructing the target drone to land, or a command for instructing the target drone to return

In some embodiments of this application, the receiving unit 2201 is configured to:
receive, via a service capability exposure network element, the request message from the application server. If the request message includes the identity information of the target drone, the identity information of the target drone in the request message forwarded by the service capability exposure network element is converted from an external identifier of a core network into an internal identifier of the core network.

In some embodiments of this application, the target event includes a statistical event, and the event execution unit 2202 is configured to:
generate statistical information of the drone based on the obtained location information of the drone.

In some embodiments of this application, the request message further includes information about a zone in which statistics are to be collected, and
the event execution unit 2202 is configured to:
generate, based on the obtained location information of the drone, the statistical information of the drone in the zone in which statistics are to be collected.

The core network element 2200 provided in this embodiment of this application is configured to perform the method performed by the core network element in the method embodiment corresponding to FIG. 2. Therefore, for understanding of this embodiment of this application, refer to the related part in the method embodiment corresponding to FIG. 2.

In this embodiment of this application, the core network element 2200 is presented in a form of function units divided through integration. The "function unit" herein may be an application-specific integrated circuit (application-specific integrated circuit, ASIC), a processor and a memory for executing one or more software or firmware programs, an integrated logic circuit, and/or another device that can provide the foregoing function. In a simple embodiment, a person skilled in the art may figure out that the core network element 2200 may be in the form shown in FIG. 21.

For example, the processor 2101 in FIG. 21 may invoke the computer execution instruction stored in the memory 2102, so that the core network element 2200 performs the method performed by the core network element in the method embodiment corresponding to FIG. 2.

Specifically, functions/implementation processes of the receiving unit 2201, the event execution unit 2202, and the sending unit 2203 in FIG. 22 may be implemented by the processor 2101 in FIG. 21 by invoking the computer execution instruction stored in the memory 2102. Alternatively, a function/an implementation process of the event execution unit 2202 in FIG. 22 may be implemented by the processor 2101 in FIG. 21 by invoking the computer execution instruction stored in the memory 2102, and functions/implementation processes of the receiving unit 2201 and the sending unit 2203 in FIG. 22 may be implemented through the communications interface 2104 in FIG. 21.

The core network element provided in this embodiment of this application may be configured to perform the method in the embodiment corresponding to FIG. 2. Therefore, for a technical effect that can be obtained in this embodiment of this application, refer to the method embodiment corresponding to FIG. 2. Details are not described herein again.

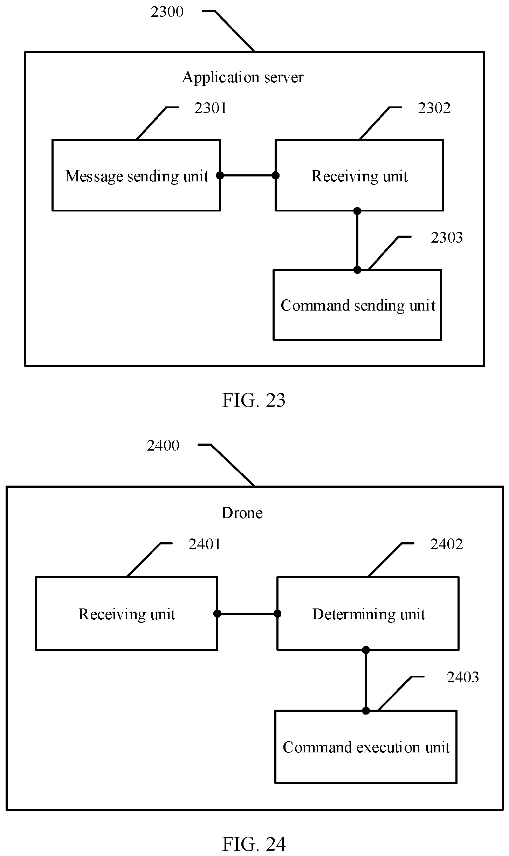

For example, when function units are divided through integration, FIG. 23 is a schematic structural diagram of an application server. As shown in FIG. 23, an embodiment of the application server 2300 in this application may include a message sending unit 2301, a receiving unit 2302, and a command sending unit 2303.

The message sending unit 2301 is configured to send a request message to a core network element. The request message includes a target event executed on a target drone.

The receiving unit 2302 is configured to receive a response message returned by the core network element. The response message includes an execution result of executing the target event by the core network element on the target drone.

The command sending unit 2303 is configured to send a flight control command to the target drone based on target information. The target information includes the execution result.

The message sending unit 2301 in the application server 2300 of this application may send the request message to the core network element. When receiving the response message corresponding to the request message from the message sending unit 2301, the receiving unit 2302 may obtain the execution result of executing the target event by the core network element on the target drone. Then, the command sending unit 2303 may send the flight control command to the target drone based on the target information including the execution result, to supervise the target drone. Mobile networks can serve drones manufactured by different vendors, and the mobile networks are widely deployed in a region. Therefore, in this method embodiment of this application, the application server obtains the response message from the core network element. This facilitates implementation of unified and extensive supervision on the drones.

In some embodiments of this application, before the message sending unit 2301 sends the request message to the core network element, the receiving unit 2302 is further configured to:
receive a report message of the target drone, where
the report message is a take-off authorization request of the target drone, or is flight data periodically reported by the target drone in a flight process.
In some embodiments of this application, the report message includes identity information of the target drone, and
the command sending unit 2303 is configured to:
   perform identity verification on the target drone based on the identity information of the target drone and obtained pre-registration information of the drone, where
   the target information further includes a result of the identity verification performed on the target drone.

In some embodiments of this application, the flight data includes location information of the target drone, and the command sending unit 2303 is configured to:
determine a flight path of the target drone based on the location information of the target drone, where
the target information further includes the flight path of the target drone.

In some embodiments of this application, the command sending unit 2303 is configured to:
determine, based on the target information, whether the target drone violates a rule; and
send the flight control command to the target drone based on whether the target drone violates the rule.

In some embodiments of this application, the flight control command includes a command indicating whether take-off is allowed, or a flight management command for the target drone.

In some embodiments of this application, the flight management command includes a command for instructing the target drone to hover, a command for instructing the target drone to land, or a command for instructing the target drone to return

The application server 2300 provided in this embodiment of this application is configured to perform the method performed by the application server in the method embodiment corresponding to FIG. 2. Therefore, for understanding of this embodiment of this application, refer to the related part in the method embodiment corresponding to FIG. 2.

In this embodiment of this application, the application server 2300 is presented in a form of function units divided through integration. The "function unit" herein may be an application-specific integrated circuit (application-specific integrated circuit, ASIC), a processor and a memory for executing one or more software or firmware programs, an integrated logic circuit, and/or another device that can provide the foregoing function. In a simple embodiment, a person skilled in the art may figure out that the application server 2300 may be in the form shown in FIG. 21.

For example, the processor 2101 in FIG. 21 may invoke the computer execution instruction stored in the memory 2102, so that the application server 2300 performs the method performed by the application server in the method embodiment corresponding to FIG. 2.

Specifically, functions/implementation processes of the message sending unit 2301, the receiving unit 2302, and the command sending unit 2303 in FIG. 23 may be implemented by the processor 2101 in FIG. 21 by invoking the computer execution instruction stored in the memory 2102. Alternatively, functions/implementation processes of the message sending unit 2301 and the receiving unit 2302 in FIG. 23 may be implemented through the communications interface 2104 in FIG. 21.

The application server 2300 provided in this embodiment of this application may be configured to perform the method in the embodiment corresponding to FIG. 2. Therefore, for a technical effect that can be obtained in this embodiment of this application, refer to the method embodiment corresponding to FIG. 2. Details are not described herein again.

For example, when function units are divided through integration, FIG. 24 is a schematic structural diagram of a drone. As shown in FIG. 24, an embodiment of the drone 2400 of this application may include a receiving unit 2401, a determining unit 2402, and a command execution unit 2403.

The receiving unit 2401 is configured to receive a first flight control command delivered by an application server and a second flight control command delivered by a controller of the target drone.

The determining unit 2402 is configured to determine the first flight control command in the first flight control command and the second flight control command based on priority information.

The command execution unit 2403 is configured to execute the first flight control command.

The drone 2400 provided in this embodiment of this application is configured to perform the method performed by the target drone in the method embodiment corresponding to FIG. 2. Therefore, for understanding of this embodiment of this application, refer to the related part in the method embodiment corresponding to FIG. 2.

In this embodiment of this application, the drone 2400 is presented in a form of function units divided through integration. The "function unit" herein may be an application-specific integrated circuit (application-specific integrated circuit, ASIC), a processor and a memory for executing one or more software or firmware programs, an integrated logic circuit, and/or another device that can provide the foregoing function. In a simple embodiment, a person skilled in the art may figure out that the drone 2400 may be in the form shown in FIG. 21.

For example, the processor 2101 in FIG. 21 may invoke the computer execution instruction stored in the memory 2102, so that the drone 2400 performs the method performed by the drone in the method embodiment corresponding to FIG. 2.

Specifically, functions/implementation processes of the receiving unit 2401, the determining unit 2402, and the command execution unit 2403 in FIG. 24 may be implemented by the processor 2101 in FIG. 21 by invoking the computer execution instruction stored in the memory 2102. Alternatively, functions/implementation processes of the determining unit 2402 and the command execution unit 2403 in FIG. 24 may be implemented by the processor 2101 in FIG. 21 by invoking the computer execution instruction stored in the memory 2102, and a function/an implementation process of the receiving unit 2401 in FIG. 24 may be implemented through the communications interface 2104 in FIG. 21.

The drone 2400 provided in this embodiment of this application may be configured to perform the method in the embodiment corresponding to FIG. 2. Therefore, for a technical effect that can be obtained in this embodiment of this application, refer to the method embodiment corresponding to FIG. 2. Details are not described herein again.

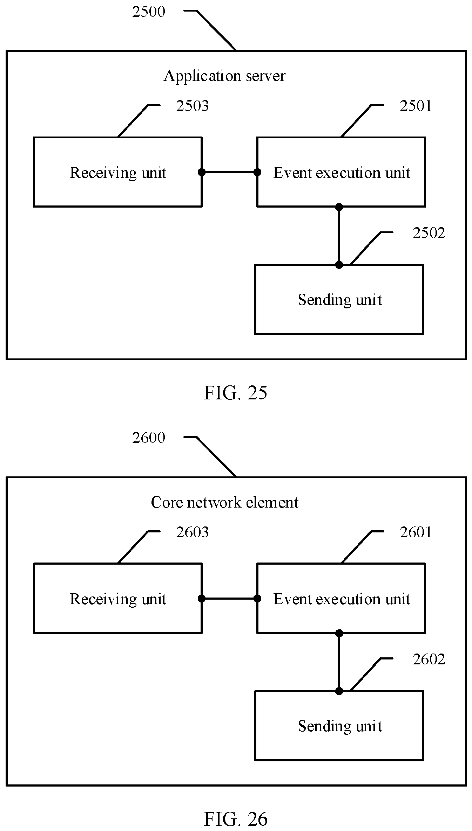

For example, when function units are divided through integration, FIG. 25 is a schematic structural diagram of an application server. As shown in FIG. 25, an embodiment of the application server 2500 of this application may include an event execution unit 2501 and a sending unit 2502.

The event execution unit 2501 is configured to execute a target event on a target drone.

The sending unit 2502 is configured to send a flight control command to the target drone based on target information via a mobile network. The target information includes an execution result of the target event.

In some embodiments of this application, the target event includes a verification event.

In some embodiments of this application, the verification event includes at least one of drone control range verification, drone location verification, and controlled zone verification.

In some embodiments of this application, if the target event includes the drone control range verification, the event execution unit 2501 is configured to:
determine, based on obtained location information of the target drone, whether the target drone is within a control range of a controller of the target drone.

In some embodiments of this application, the event execution unit 2501 is further configured to:
obtain the location information of the target drone based on identity information of the target drone.

In some embodiments of this application, if the target event includes the drone location verification, the event execution unit 2501 is configured to:
determine, based on location information reported by the target drone and obtained location information of the target drone, whether a location of the target drone is accurate.

In some embodiments of this application, the event execution unit 2501 is further configured to:
obtain the location information of the target drone based on identity information of the target drone.

In some embodiments of this application, if the target event includes the controlled zone verification, the event execution unit 2501 is configured to:
determine, based on obtained location information of the target drone and controlled zone information, whether a location of the target drone is in a controlled zone.

In some embodiments of this application, the event execution unit 2501 is further configured to:
obtain the location information of the target drone based on the identity information of the target drone.

In some embodiments of this application, the event execution unit 2501 is further configured to:
if determining that the location of the target drone is not in the controlled zone, determine, based on the location information of the target drone and the controlled zone information, risk information that the target drone enters the controlled zone.

In some embodiments of this application, if the controlled zone information is no-fly zone information, the event execution unit 2501 is further configured to:
if determining that the location of the target drone is in a no-fly zone, determine a flight path along which the target drone flies out of the no-fly zone.

In some embodiments of this application, the target event includes a statistical event, and the event execution unit 2501 is configured to:
generate statistical information of the drone based on the obtained location information of the drone.

In some embodiments of this application, the event execution unit 2501 is further configured to:
generate, based on the obtained location information of the drone, the statistical information of the drone in a zone in which statistics are to be collected.

In some embodiments of this application, before the flight control command is sent to the target drone based on the target information, the apparatus further includes:
a receiving unit 2503, configured to receive a report message of the target drone, where
the report message is a take-off authorization request of the target drone, or is flight data periodically reported by the target drone in a flight process.

In some embodiments of this application, the report message includes the identity information of the target drone, and
the event execution unit 2501 is further configured to:
perform identity verification on the target drone based on the identity information of the target drone and obtained pre-registration information of the drone, where
the target information further includes a result of the identity verification performed on the target drone.

In some embodiments of this application, the flight data includes the location information of the target drone, and
the event execution unit 2501 is further configured to:
determine a flight path of the target drone based on the location information of the target drone, where
the target information further includes the flight path of the target drone.

In some embodiments of this application, the sending unit 2502 is configured to:
determine, based on the target information, whether the target drone violates a rule; and
send the flight control command to the target drone based on whether the target drone violates the rule.

In some embodiments of this application, the flight control command includes a command indicating whether take-off is allowed, or a flight management command for the target drone.

In some embodiments of this application, the flight management command includes a command for instructing the target drone to hover, a command for instructing the target drone to land, or a command for instructing the target drone to return

The application server 2500 provided in this embodiment of this application is configured to perform the method performed by the application server in the method embodiment corresponding to FIG. 13. Therefore, for understanding of this embodiment of this application, refer to the related part in the method embodiment corresponding to FIG. 13.

In this embodiment of this application, the application server 2500 is presented in a form of function units divided through integration. The "function unit" herein may be an application-specific integrated circuit (application-specific integrated circuit, ASIC), a processor and a memory for executing one or more software or firmware programs, an integrated logic circuit, and/or another device that can provide the foregoing function. In a simple embodiment, a person skilled in the art may figure out that the application server 2500 may be in the form shown in FIG. 21.

For example, the processor 2101 in FIG. 21 may invoke the computer execution instruction stored in the memory 2102, so that the application server 2500 performs the method performed by the application server in the method embodiment corresponding to FIG. 13.

Specifically, functions/implementation processes of the event execution unit 2501 and the sending unit 2502 in FIG. 25 may be implemented by the processor 2101 in FIG. 21 by invoking the computer execution instruction stored in the memory 2102. Alternatively, a function/an implementation process of the event execution unit 2501 in FIG. 25 may be implemented by the processor 2101 in FIG. 21 by invoking the computer execution instruction stored in the memory 2102, and a function/an implementation process of the sending unit 2502 in FIG. 25 may be implemented through the communications interface 2104 in FIG. 21.

The application server 2500 provided in this embodiment of this application may be configured to perform the method in the embodiment corresponding to FIG. 13. Therefore, for a technical effect that can be obtained in this embodiment of this application, refer to the method embodiment corresponding to FIG. 13. Details are not described herein again.

For example, when function units are divided through integration, FIG. 26 is a schematic structural diagram of an application server. As shown in FIG. 26, an embodiment of the core network element 2600 of this application may include an event execution unit 2601 and a sending unit 2602.

The event execution unit 2601 is configured to execute a target event on a target drone.

The sending unit 2602 is configured to send a flight control command to the target drone based on target information. The target information includes an execution result of the target event.

In some embodiments of this application, the target event includes a verification event.

In some embodiments of this application, the verification event includes at least one of drone control range verification, drone location verification, and controlled zone verification.

In some embodiments of this application, if the target event includes the drone control range verification, the event execution unit 2601 is configured to:
determine, based on obtained location information of the target drone, whether the target drone is within a control range of a controller of the target drone.

In some embodiments of this application, the event execution unit 2601 is further configured to:
obtain the location information of the target drone based on identity information of the target drone.

In some embodiments of this application, if the target event includes the drone location verification, the event execution unit 2601 is configured to:
determine, based on location information reported by the target drone and obtained location information of the target drone, whether a location of the target drone is accurate.

In some embodiments of this application, the event execution unit 2601 is further configured to:
obtain the location information of the target drone based on identity information of the target drone.

In some embodiments of this application, if the target event includes the controlled zone verification, the event execution unit 2601 is configured to:
determine, based on obtained location information of the target drone and controlled zone information, whether a location of the target drone is in a controlled zone.

In some embodiments of this application, the event execution unit 2601 is further configured to:
obtain the location information of the target drone based on identity information of the target drone.

In some embodiments of this application, the event execution unit 2601 is further configured to:
if determining that the location of the target drone is not in the controlled zone, determine, based on the location information of the target drone and the controlled zone information, risk information that the target drone enters the controlled zone.

In some embodiments of this application, if the controlled zone information is no-fly zone information, the event execution unit 2601 is further configured to:
if determining that the location of the target drone is in a no-fly zone, determine a flight path along which the target drone flies out of the no-fly zone.

In some embodiments of this application, the target event includes a statistical event, and the event execution unit 2601 is configured to:
generate statistical information of the drone based on the obtained location information of the drone.

In some embodiments of this application, the event execution unit 2601 is configured to:
generate, based on the obtained location information of the drone, the statistical information of the drone in a zone in which statistics are to be collected.

In some embodiments of this application, before the flight control command is sent to the target drone based on the target information, the apparatus further includes:
a receiving unit 2603, configured to receive a report message of the target drone, where
the report message is a take-off authorization request of the target drone, or is flight data periodically reported by the target drone in a flight process.

In some embodiments of this application, the report message includes the identity information of the target drone, and
the event execution unit 2601 is further configured to:
perform identity verification on the target drone based on the identity information of the target drone and obtained pre-registration information of the drone, where
the target information further includes a result of the identity verification performed on the target drone.

In some embodiments of this application, the flight data includes the location information of the target drone, and
the event execution unit 2601 is further configured to:
determine a flight path of the target drone based on the location information of the target drone, where
the target information further includes the flight path of the target drone.

In some embodiments of this application, the sending unit 2602 is configured to:
determine, based on the target information, whether the target drone violates a rule; and
send the flight control command to the target drone based on whether the target drone violates the rule.

In some embodiments of this application, the flight control command includes a command indicating whether take-off is allowed, or a flight management command for the target drone.

In some embodiments of this application, the flight management command includes a command for instructing the target drone to hover, a command for instructing the target drone to land, or a command for instructing the target drone to return

The core network element 2600 provided in this embodiment of this application is configured to perform the method performed by the core network element in the method embodiment corresponding to FIG. 17. Therefore, for understanding of this embodiment of this application, refer to the related part in the method embodiment corresponding to FIG. 17.

In this embodiment of this application, the core network element 2600 is presented in a form of function units divided through integration. The "function unit" herein may be an application-specific integrated circuit (application-specific integrated circuit, ASIC), a processor and a memory for executing one or more software or firmware programs, an integrated logic circuit, and/or another device that can provide the foregoing function. In a simple embodiment, a person skilled in the art may figure out that the core network element 2600 may be in the form shown in FIG. 21.

For example, the processor 2101 in FIG. 21 may invoke the computer execution instruction stored in the memory 2102, so that the core network element 2600 performs the method performed by the core network element in the method embodiment corresponding to FIG. 17.

Specifically, functions/implementation processes of the event execution unit 2601 and the sending unit 2602 in FIG. 26 may be implemented by the processor 2101 in FIG. 21 by invoking the computer execution instruction stored in the memory 2102. Alternatively, a function/an implementation process of the event execution unit 2601 in FIG. 26 may be implemented by the processor 2101 in FIG. 21 by invoking the computer execution instruction stored in the memory 2102, and a function/an implementation process of the sending unit 2602 in FIG. 26 may be implemented through the communications interface 2104 in FIG. 21.

The core network element provided in this embodiment of this application may be configured to perform the method in the embodiment corresponding to FIG. 17. Therefore, for a technical effect that can be obtained in this embodiment of this application, refer to the method embodiment corresponding to FIG. 17. Details are not described herein again.

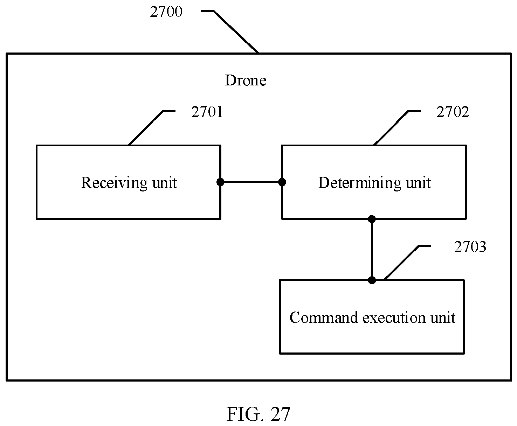

For example, when function units are divided through integration, FIG. 27 is a schematic structural diagram of a drone. As shown in FIG. 27, an embodiment of the drone 2700 of this application may include a receiving unit 2701, a determining unit 2702, and a command execution unit 2703.

The receiving unit 2701 is configured to receive a first flight control command delivered by a core network element and a second flight control command delivered by a controller of the target drone.

The determining unit 2702 is configured to determine the first flight control command in the first flight control command and the second flight control command based on priority information.

The command execution unit 2703 is configured to execute the first flight control command.

The drone 2700 provided in this embodiment of this application is configured to perform the method performed by the target drone in the method embodiment corresponding to FIG. 17. Therefore, for understanding of this embodiment of this application, refer to the related part in the method embodiment corresponding to FIG. 17.

In this embodiment of this application, the drone 2700 is presented in a form of function units divided through integration. The "function unit" herein may be an application-specific integrated circuit (application-specific integrated circuit, ASIC), a processor and a memory for executing one or more software or firmware programs, an integrated logic circuit, and/or another device that can provide the foregoing function. In a simple embodiment, a person skilled in the art may figure out that the drone 2700 may be in the form shown in FIG. 21.

For example, the processor 2101 in FIG. 21 may invoke the computer execution instruction stored in the memory 2102, so that the drone 2700 performs the method performed by the drone in the method embodiment corresponding to FIG. 17.

Specifically, functions/implementation processes of the receiving unit 2701, the determining unit 2702, and the command execution unit 2703 in FIG. 27 may be implemented by the processor 2101 in FIG. 21 by invoking the computer execution instruction stored in the memory 2102. Alternatively, functions/implementation processes of the determining unit 2702 and the command execution unit 2703 in FIG. 27 may be implemented by the processor 2101 in FIG. 21 by invoking the computer execution instruction stored in the memory 2102, and a function/an implementation process of the receiving unit 2701 in FIG. 27 may be implemented through the communications interface 2104 in FIG. 21.

The drone 2700 provided in this embodiment of this application may be configured to perform the method in the embodiment corresponding to FIG. 17. Therefore, for a technical effect that can be obtained in this embodiment of this application, refer to the method embodiment corresponding to FIG. 17. Details are not described herein again.

In the embodiments corresponding to FIG. 22 to FIG. 27, the core network element, the application server, and the drone are each presented in a form of function units divided through integration. Certainly, division may alternatively be performed on each function unit based on each function in this application. This is not specifically limited in the embodiments of this application.

In the apparatuses in FIG. 21 to FIG. 27 of this application, a communications connection is implemented between the components. To be specific, a processing unit (or a processor), a storage unit (or a memory), and a transceiver unit (a transceiver) communicate with each other through an internal connection path, to transfer a control signal and/or a data signal. The foregoing method embodiments of this application may be applied to the processor, or the processor implements the steps in the foregoing method embodiments. The processor may be an integrated circuit chip and has a signal processing capability. In an implementation process, the steps in the foregoing method embodiments may be performed by using a hardware integrated logical circuit in the processor, or by using instructions in a form of software. The processor may be a central processing unit (central processing unit, CPU), a network processor (network processor, NP), a combination of a CPU and an NP, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in this application. The general-purpose processor may be a microprocessor, or the processor may be any conventional processor or the like. Steps of the methods disclosed in this application may be directly executed and completed by using a hardware decoding processor, or may be executed and completed by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. Although only one processor is shown in the figure, the apparatus may include a plurality of processors, or the processor includes a plurality of processing units. Specifically, the processor may be a single-core (single-CPU) processor or a multi-core (multi-CPU) processor.

The memory is configured to store a computer instruction executed by the processor. The memory may be a storage circuit or a memory. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. The memory may be independent of the processor, or may be a storage unit in the processor. This is not limited herein. Although only one memory is shown in the figure, the apparatus may alternatively include a plurality of memories, or the memory includes a plurality of storage units.

The transceiver is configured to implement content exchange between the processor and another unit or network element. Specifically, the transceiver may be a communications interface of the apparatus, may be a transceiver circuit or a communications unit, or may be a transceiver. The transceiver may alternatively be a communications interface or a transceiver circuit of the processor. In a possible implementation, the transceiver may be a transceiver chip. The transceiver may further include a sending unit and/or a receiving unit. In a possible implementation, the transceiver may include at least one communications interface. In another possible implementation, the transceiver may alternatively be a unit implemented in a form of software. In the embodiments of this application, the processor may interact with another unit or network element through the transceiver. For example, the processor obtains or receives content from another network element through the transceiver. If the processor and the transceiver are two physically separated components, the processor may exchange content with another unit in the apparatus without using the transceiver.

In a possible implementation, the processor, the memory, and the transceiver may be connected to each other by using a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

In the embodiments of this application, the term such as "example" or "for example" is used to represent giving an example, an illustration, or a description. Any embodiment or design solution described by using "example" or "for example" in the embodiments of this application shall not be construed as being more preferred or more advantageous than another embodiment or design solution. Exactly, use of the term such as "example" or "for example" is intended to present a relative concept in a specific manner.

In the embodiments of this application, for ease of understanding, a plurality of examples are used for description. However, these examples are merely examples, but this does not mean that these examples are optimal implementations for implementing this application.

In the embodiments of this application, for ease of description, a request message, a response message, and names of various other messages are used. However, these messages are merely used as examples to describe content that needs to be carried or a function that needs to be implemented. Specific names of the messages do not constitute any limitation on this application. For example, the messages may be a first message, a second message, and a third message. These messages may be some specific messages, or may be some fields in messages. These messages may alternatively represent various service operations.

All or some of the foregoing embodiments may be implemented by using software, hardware, firmware, or any combination thereof. When the software is used for implementation, all or some of the embodiments may be implemented in a form of a computer program product.

The computer program product includes one or more computer instructions. When the computer execution instructions are loaded and executed on a computer, the procedures or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

The technical solutions provided in this application are described in detail above. The principle and implementation of this application are described herein through specific examples. The descriptions about the embodiments are merely provided to help understand the methods and core ideas of this application. In addition, a person of ordinary skill in the art can make variations to the specific implementations and application scopes based on the ideas of this application. Therefore, the content of this specification shall not be construed as a limitation to this application.

## Claims

1. A mobile network-based drone supervision method, comprising:
receiving, by a core network element, a request message from an application server, wherein the request message comprises a target event executed on a target drone;
executing, by the core network element, the target event on the target drone based on the request message; and
returning, by the core network element, a response message to the application server, wherein the response message comprises an execution result of the target event.

2. The method according to claim 1, wherein the target event comprises a verification event.

3. The method according to claim 2, wherein the verification event comprises at least one of drone control range verification, drone location verification, and controlled zone verification.

4. The method according to claim 3, wherein if the target event comprises the drone control range verification, the executing, by the core network element, the target event on the target drone based on the request message comprises:
determining, by the core network element based on obtained location information of the target drone, whether the target drone is within a control range of a controller of the target drone.

5. The method according to claim 4, wherein the request message further comprises identity information of the target drone; and
the method further comprises:
obtaining, by the core network element, the location information of the target drone based on the identity information of the target drone.

6. The method according to claim 3, wherein if the target event comprises the drone location verification, the executing, by the core network element, the target event on the target drone based on the request message comprises:
determining, by the core network element based on location information reported by the target drone and obtained location information of the target drone, whether a location of the target drone is accurate.

7. The method according to claim 3, wherein if the target event comprises the controlled zone verification, the executing, by the core network element, the target event on the target drone based on the request message comprises:
determining, by the core network element based on obtained location information of the target drone and controlled zone information, whether a location of the target drone is in a controlled zone.

8. The method according to claim 7, wherein the executing, by the core network element, the target event on the target drone based on the request message further comprises:
if the core network element determines that the location of the target drone is not in the controlled zone, determining, by the core network element based on the location information of the target drone and the controlled zone information, risk information that the target drone enters the controlled zone.

9. The method according to claim 7, wherein if the controlled zone information is no-fly zone information, the executing, by the core network element, the target event on the target drone based on the request message further comprises:
if the core network element determines that the location of the target drone is in a no-fly zone, determining, by the core network element, a flight path along which the target drone flies out of the no-fly zone.

10. The method according to any one of claims 2 to 9, wherein the target event further comprises authorization decision, the executing, by the core network element, the target event on the target drone based on the request message comprises:
determining, by the core network element based on whether the target drone passes the verification event, whether the target drone violates a rule.

11. The method according to claim 10, wherein the method further comprises:
sending, by the core network element, a flight control command to the target drone based on whether the target drone violates the rule.

12. The method according to claim 11, wherein the target event comprises a statistical event, and the executing, by the core network element, the target event on the target drone based on the request message comprises:
generating, by the core network element, statistical information of the drone based on the obtained location information of the drone.

13. The method according to claim 12, wherein the request message further comprises information about a zone in which statistics are to be collected; and
the generating, by the core network element, statistical information of the drone based on the obtained location information of the drone comprises:
generating, by the core network element based on the obtained location information of the drone, the statistical information of the drone in the zone in which statistics are to be collected.

14. A core network element, comprising:
a receiving unit, configured to receive a request message from an application server, wherein the request message comprises a target event executed on a target drone;
an event execution unit, configured to execute the target event on the target drone based on the request message; and
a sending unit, configured to return a response message to the application server, wherein the response message comprises an execution result of the target event.

15. The core network element according to claim 14, wherein if the target event comprises drone control range verification, the event execution unit is configured to:
determine, based on obtained location information of the target drone, whether the target drone is within a control range of a controller of the target drone.

16. The core network element according to claim 15, wherein the request message further comprises identity information of the target drone; and
the event execution unit is further configured to:
obtain the location information of the target drone based on the identity information of the target drone.

17. The core network element according to claim 14, wherein if the target event comprises drone location verification, the event execution unit is configured to:
determine, based on location information reported by the target drone and obtained location information of the target drone, whether a location of the target drone is accurate.

18. The core network element according to claim 14, wherein if the target event comprises controlled zone verification, the event execution unit is configured to:
determining, based on obtained location information of the target drone and the controlled zone information, whether a location of the target drone is in a controlled zone.

19. The core network element according to claim 18, wherein the event execution unit is further configured to:
if determining that the location of the target drone is not in the controlled zone, determine, based on the location information of the target drone and the controlled zone information, risk information that the target drone enters the controlled zone.

20. The core network element according to claim 18, wherein if the controlled zone information is no-fly zone information, the event execution unit is further configured to:
if determining that the location of the target drone is in a no-fly zone, determine a flight path along which the target drone flies out of the no-fly zone.

21. The core network element according to any one of claims 14 to 20, wherein if the target event comprises a verification event and authorization decision, the event execution unit is configured to:
determine, based on whether the target drone passes the verification event, whether the target drone violates a rule.

22. The core network element according to claim 21, wherein the sending unit is further configured to:
send a flight control command to the target drone based on whether the target drone violates the rule.

23. The core network element according to claim 22, wherein if the target event comprises a statistical event, the event execution unit is configured to:
generate statistical information of the drone based on the obtained location information of the drone.

24. The core network element according to claim 23, wherein the request message further comprises information about a zone in which statistics are to be collected; and
the event execution unit is configured to:
generate, based on the obtained location information of the drone, statistical information of the drone in the zone in which statistics are to be collected.

25. A core network element, comprising: at least one processor, a memory, a communications line, at least one communications interface, and a computer execution instruction that is stored in the memory and that can be run on the processor, wherein when the computer execution instruction is executed by the processor, the processor performs the method according to any one of claims 1 to 13.

26. A computer-readable storage medium storing one or more computer execution instructions, wherein when the computer execution instructions are executed by a processor, the processor performs the method according to any one of claims 1 to 13.

27. A computer program product storing one or more computer execution instructions, wherein when the computer execution instructions are executed by a processor, the processor performs the method according to any one of claims 1 to 13.
